(19) **Europäisches Patentamt / European Patent Office / Office européen des brevets**

(11) **EP 4 705 244 B1**

(12) **EUROPEAN PATENT SPECIFICATION**

(45) Date of publication and mention
of the grant of the patent:
**17.06.2026 Bulletin 2026/25**

(21) Application number: **24736772.5**

(22) Date of filing: **24.06.2024**

(51) International Patent Classification (IPC):
*C01G 39/00* $^{(2006.01)}$    *C01G 41/00* $^{(2006.01)}$
*C07F 5/00* $^{(2006.01)}$    *C07F 11/00* $^{(2006.01)}$
*C22B 3/16* $^{(2006.01)}$    *C01F 17/10* $^{(2020.01)}$
*C22B 3/38* $^{(2006.01)}$    *C22B 59/00* $^{(2006.01)}$
*C22B 3/26* $^{(2006.01)}$

(52) Cooperative Patent Classification (CPC):
**C22B 59/00; C01F 17/10; C01G 39/006;
C01G 41/006; C07F 11/005; C22B 3/16;
C22B 3/26; C22B 3/38;** C07F 5/003; Y02P 10/20

(86) International application number:
**PCT/EP2024/067706**

(87) International publication number:
**WO 2025/003082 (02.01.2025 Gazette 2025/01)**

(54) **AN EFFICIENT SEPARATION PROCESS FOR RARE EARTH ELEMENT COMPOUNDS AND NOVEL RARE EARTH ELEMENT COMPLEXES USED THEREFOR**

EFFIZIENTES TRENNVERFAHREN FÜR SELTENERDELEMENTVERBINDUNGEN UND NEUARTIGE SELTENERDELEMENTKOMPLEXE DAFÜR

PROCÉDÉ DE SÉPARATION EFFICACE DE COMPOSÉS DE TERRES RARES ET NOUVEAUX COMPLEXES DE TERRES RARES UTILISÉS À CET EFFET

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **26.06.2023 EP 23306022**

(43) Date of publication of application:
**11.03.2026 Bulletin 2026/11**

(73) Proprietor: **ETH Zürich
8092 Zürich (CH)**

(72) Inventors:
• **MOUGEL, Victor
8046 Zürich (CH)**
• **PERRIN, Marie Amélie
CH Zürich (CH)**

(74) Representative: **Deblon, Jörg-Stephan
Patentanwaltskanzlei Dr. Deblon
Alte Honrather Strasse 22
53797 Lohmar (DE)**

(56) References cited:
WO-A1-2015/106324    WO-A1-2021/127497
DE-A1- 102014 206 223    JP-A- 2021 528 359
US-A- 4 647 438    US-A1- 2009 162 267
US-A1- 2019 078 175    US-A1- 2021 261 510
US-A1- 2021 269 322    US-A1- 2023 059 863
US-B2- 11 401 579

• PETER FRÖHLICH ET AL: "Valuable Metals-Recovery Processes, Current Trends, and Recycling Strategies", ANGEWANDTE CHEMIE INTERNATIONAL EDITION, VERLAG CHEMIE, HOBOKEN, USA, vol. 56, no. 10, 27 January 2017 (2017-01-27), pages 2544 - 2580, XP072104843, ISSN: 1433-7851, DOI: 10.1002/ANIE.201605417

**(Cont. next page)**

- SOLODOVNIKOV S F ET AL: "MOLYBDATES AND TUNGSTATES OF THE ALLUAUDITE FAMILY: CRYSTAL CHEMISTRY, COMPOSITION, AND IONIC MOBILITY", JOURNAL OF STRUCTURAL CHEMISTRY, PLEIADES PUBLISHING, MOSCOW, vol. 63, no. 7, 1 July 2022 (2022-07-01), pages 1101 - 1133, XP037918335, ISSN: 0022-4766, [retrieved on 20220728], DOI: 10.1134/S0022476622070071
- BRADZIL J ET AL: "Relationship between solid state structure and catalytic activity of rare earth and bismuth-containing molybdate ammoxidation catalysts", JOURNAL OF CATALYSIS, ACADEMIC PRESS, DULUTH, MN, US, vol. 79, no. 1, 1 January 1983 (1983-01-01), pages 104 - 117, XP009119093, ISSN: 0021-9517, DOI: 10.1016/0021-9517(83)90293-2
- DATABASE COMPENDEX [online] ENGINEERING INFORMATION, INC., NEW YORK, NY, US; 15 August 2022 (2022-08-15), RAMPRASAD C: "Strategies and options for the sustainable recovery of rare earth elements from electrical and electronic waste", XP002810710, Database accession no. E20221511958007
- RAMPRASAD C: "Strategies and options for the sustainable recovery of rare earth elements from electrical and electronic waste", CHEMICAL ENGINEERING JOURNAL 20220815 ELSEVIER B.V. NLD, vol. 442, 15 August 2022 (2022-08-15), DOI: 10.1016/J.CEJ.2022.135992
- DATABASE COMPENDEX [online] ENGINEERING INFORMATION, INC., NEW YORK, NY, US; 20 July 2019 (2019-07-20), WU Y ET AL: "Selective recovery of Y and Eu from rare-earth tricolored phosphorescent powders waste via a combined acid-leaching and photo-reduction process", XP002810711, Database accession no. E20191806852350
- WU Y ET AL: "Selective recovery of Y and Eu from rare-earth tricolored phosphorescent powders waste via a combined acid-leaching and photo-reduction process", JOURNAL OF CLEANER PRODUCTION 20190720 ELSEVIER LTD GBR, vol. 226, 20 July 2019 (2019-07-20), pages 858 - 865, DOI: 10.1016/ J.JCLEPRO.2019.04.137
- DATABASE COMPENDEX [online] ENGINEERING INFORMATION, INC., NEW YORK, NY, US; 1 March 2022 (2022-03-01), FUJITA Y [0000-0002-4472-4102] ET AL: "Recycling rare earths: Perspectives and recent advances", XP002810712, Database accession no. E20221712028844
- FUJITA Y [0000-0002-4472-4102] ET AL: "Recycling rare earths: Perspectives and recent advances", MRS BULLETIN 20220301 SPRINGER NATURE CHE, vol. 47, no. 3, 1 March 2022 (2022-03-01), pages 283 - 288, DOI: 10.1557/ S43577-022-00301-W

**Description**

**Field of the Invention**

The present invention relates to a separation process for rare earth element compounds by converting a mixture of rare earth element compounds into novel thiometallate complexes which exhibit substantially different structures and thus solubility depending on the rare earth metals employed in said process and their state of oxidation.
The invention further encompasses the thiometallate complexes as such.

**Background**

The Rare Earth Elements (REEs) are a group of 17 chemically similar metallic elements comprising 15 lanthanides as well as scandium and yttrium. In the current context of digitization and energy transition to mitigate climate change, REEs are key in many technologies, from permanent magnets in wind turbines to batteries in electric cars and lamp phosphors in optical displays and energy-saving lamps. The demand for these elements is therefore expected to increase tremendously in the next 20 years. But because of their unequal geographic distribution they are highly susceptible to global supply risks and surge pricing. Furthermore, current mining and separation technologies typically go along with a high environmental burden due to radioactive by-products, very high water consumption and extensive use of chemicals which often leak in groundwater and waterways.
To efficiently utilize existing resources it is key to build a sustainable and circular economy for REEs. In fact, electronic waste represent very large reserves of REEs which are currently not re-entering the market. The total global recycling potential of REEs from magnets, batteries and phosphors is estimated to 5,600 and 10,700 metric tons, similar to the annual usage of REEs in Europe. Yet, the current recycling rates are below 1%, see [1] P. Fröhlich, T. Lorenz, G. Martin, B. Brett, M. Bertau, Angew. Chem. Int. Ed. 2017, 56, 2544-2580 and [2] C. Hagelüken, D. Goldmann, Miner. Econ. 2022.
A summary on REE recycling technologies is given in [3] Nikhil Dhawan, Himanshu Tanvar "A critical review of end-of-life fluorescent lamps recycling for recovery of rare earth values, Sustainable Materials and Technologies 32 (2022).
Among the REEs, Europium (Eu) is one of the most critical. Its scarcity - Eu accounts for only 0.05-0.10% w/w of common ores - and the high demand to produce red lamp phosphors $Y_2O_3$:$Eu^{3+}$ have resulted in high market value (see [4] Y. Fujita, S.K McCall, D. Ginosar," Recycling rare earths: Perspectives and recent advances"; MRS Bulletin 47, 283-288; . and [5] C. Ramprasad, Willis Gwenzi, Nhamo Chaukura, Nur Izyan Wan Azelee, Anushka Upamali Rajapaksha, M. Naushad, S. Rangabhashiyam, "Strategies and options for the sustainable recovery of rare earth elements from electrical and electronic waste", Chemical Engineering Journal, 442,1 (2022).
Efficient separation of europium and yttrium is very attractive to take advantage of cheap spent fluorescent lamps, since the REEs contents are much higher than in natural ores, making the recycling substantial from an extraction perspective ([6] A. Anand, R. Singh, Sep. Purif. Rev. 2021, 50, 96-112]). However, separation of the REEs is extremely challenging due to their similar chemical properties, which all occur in the stable trivalent oxidation state. Separation by traditional methods, such as solvent extraction, are both time-consuming and expensive because many extraction steps are necessary to reach high purity products ([7] Y. Wu, X. Yin, Q. Zhang, W. Wang, X. Mu, Resour. Conserv. Recycl. 2014, 88, 21-31 and [8] E. O. Opare, E. Struhs, A. Mirkouei, Renew. Sust. Energ. Rev. 2021, 143, 110917).
Redox chemistry on the other hand proved to be much more efficient to recover europium, since Eu is the REE with the highest reduction potential (E1/2 = - 0.34 V vs. SHE for the Eu(II/III) couple), see [9] L. R. Morss, Chem. Rev. 1976, 76, 827-841. This reduction can be conducted with chemical reductants like zinc powder or zinc amalgam, but it poses the problem of zinc contamination of the rare-earth solution and mercury pollution in the case of zinc amalgam. Electrochemical reduction is attractive but currently suffers from low efficiencies due to the competition with the hydrogen evolution reaction. Finally, to circumvent the use of toxic chemicals and improve selectivity, photochemical methods have also been used. However, they have so far relied on polychromatic mercury lamps to induce the charge-transfer band of water to reduce Eu(III) to Eu(II) ($\lambda_{max}$ = 188 nm), and the backward oxidation can be induced by visible light ($\lambda_{max}$ = 366 nm) making the photochemical reduction in water an overall inefficient process ([10] A. Kumari, M. K. Jha, D. D. Pathak, S. Chakravarty, J.-c. Lee, Sep. Purif. Rev. 2019, 48, 91-121).
Photochemical reduction to induce precipitation of Eu(II) in the presence of sulfate ions has been reported with over 95% efficiency, however this process required long UV exposure (24-30h at $\lambda_{max}$ = 240 nm) ([11] B. Van den Bogaert, D. Havaux, K. Binnemans, T. Van Gerven, Green Chem. 2015, 17, 2180-2187; [12] Y. Wu, Q. Zhang, T. Zuo, J. Clean. Prod. 2019, 226, 858-865).
In US 2012/0027651A a method of recovery of rare earth element compounds from fluorescent lamps is disclosed. The method comprises six steps including mechanical separation of coarse components, separation of the REE halophosphates, extraction in acids of easily soluble rare-earth fluorescent substances, mainly Yttrium and Europium oxides, extraction in acids of rare earth fluorescent substances which dissolve with difficulty like rare-earth phosphates, breakdown of the remaining components which contain rare earths such as rare-earth-aluminates and a final treatment.

WO 2015/106324 A1 discloses a solvent extraction process for the extraction of rare earth element compounds as a group and for the separation of a mixture of rare earths into the individual elements by extracting the rare earths from a feed solution containing anions that form weakly extracting complexes such as chloride or sulfate salts to an organic phase through complex formation with anions present exclusively In the organic phase. The organic phase comprises a water-immiscible ionic liquid with nitrate or thiocyanate anions. In addition to the ionic liquid, the organic phase can also contain a neutral extractant. The rare earths are finally stripped as chloride or sulfate salts from the loaded organic phase.

A further process for the recycling of critical rare earth elements (REEs) from end of life lamp fluorescent powder electronic waste is disclosed in WO 2019/201581 A1. The process involves the use of mineral acid for the sequential digestion of REE compounds and numerous liquid-liquid extractive separation cycles using selective extractant ligand molecules followed by a hydrometallurgical process to separate Y, Eu, and Tb, to more than 99% purity and Gd, La and Ce to elevated purities each from the digested electronic waste.

DE102014206223 and DE 102014224015 present a process for recovering rare earths from rare earth-containing compositions such as, for example, FeNdB magnets or fluorescent lamp waste as rare earth fluorides or rare earth oxalates, the process comprising the steps of crushing the rare earth-containing compositions under an inert gas atmosphere to a particle size in the range of 50 to 400 $\mu$m; adding solid ammonium chloride and chlorinating the chlorinatable metals to metal chlorides at a temperature in the range of 200 to 800°C for a period of 1 to 5 hours. Thereafter, an acidic solution is added to the metal chlorides followed by a multi-step workup to obtain rare earth-containing precipitates.

However, the necessity of either numerous extraction and filtration steps, the use of various complex organic chemicals or the application of very harsh conditions render the aforementioned processes commercially hardly attractive.

Therefore, and despite the progress made so far there was still a need to provide an efficient and facile process to produce, purify or recover and separate REE compounds from various sources.

## Summary of the Invention

According to one aspect of the invention, there is now provided a process for the separation of rare earth element compounds comprising at least the steps of

1) Reacting a mixture of at least two compounds of formula (I) comprising at least two different rare earth elements M,

$$MAn_3 \qquad (I)$$

wherein M denotes a rare earth metal ion in the oxidation state (+III) selected from the group consisting of:

Sc, Y, La, Ce, Pr, Nd, Pm, Sm, Eu, Gd, Tb, Dy, Ho, Er, Tm, Yb and Lu, preferably Y, La, Ce, Pr, Nd, Sm, Eu, Gd, Tb, Dy, Ho, Er, Tm, Yb and Lu and

An denotes a monoanion or 2 An together denote a dianion or 3 An together denote a trianion

with compounds of formula (II)

$$Cat_2(MetS_xO_{(4-x)}) \qquad (II)$$

wherein

Cat is a monocation or $Cat_2$ as a whole is a dication

Met is W or Mo, preferably W

x is 1, 2, 3 or 4, preferably 2, 3 or 4, more preferably 4

in the presence of at least one organic donor solvent, preferably at least one organic donor solvent capable of coordinating to rare earth metal ions M

thereby forming a precipitate and

2) separating the precipitate formed in step 1) from the residual solution.

Another aspect the invention relates to compounds comprising the structural units of formulae (III), (IV) or (V)

$$Cat_2[M^{II}(MetS_xO_{(4-x)})_2] \qquad (III)$$

$$Cat_3[M^{III}L_z(MetS_xO_{(4-x)})_3] \qquad (IV)$$

$$Cat_6[M^{III}(MetS_xO_{(4-x)})_3]_2 \qquad (V)$$

wherein Cat, Met and x have the meaning including their preferential meaning given above, L denotes a donor solvent, preferably a donor solvent capable of coordinating to rare earth metal ions M, z is 0, 1 or 2, preferably 1 or 2 and

M in formula (III) is Eu, Yb, Sm, Tm or Dy

M in formula (IV) is Sc, Y, Nd, Sm, Eu, Gd, Tb, Dy, Ho, Er, Tm, Yb, Lu

M in formula (V) is La, Ce, Pr, Pm, Nd, Sm

The invention further encompasses the use of compounds of formula (II) for the separation of rare earth element compounds.
In a further aspect the invention encompasses a process for production, purification or recycling of rare earth metals comprising the inventive separation process.
Further aspects of the invention are disclosed in detail below.

## Brief description of the drawings

Figure 1 shows the ionic radii of rare earth elements versus the solubility of compounds comprising structural elements of formulae (III) to (V) depending on M.

Figure 2 shows the crystal structure of $[NEt_4]_2[Eu^{II}(WS_4)_2] \cdot 2(MeCN)$ as determined by the method disclosed in the experimental part and serving as an example for polymeric compounds comprising the structural element of formula (III).

Figure 3 shows the crystal structure of $[NEt_4]_3[Eu^{III}(MeCN)_2(WS_4)_3]$ MeCN as determined by the method disclosed in the experimental part and serving as an example for compounds comprising the structural element of formula (IV).

Figure 4 shows the crystal structure of $[NEt_4]_3[Y^{III}(MeCN)_2(WS_4)_3]$ as determined by the method disclosed in the experimental part and serving as another example for compounds comprising the structural element of formula (IV).

Figure 5 shows the crystal structure of $[NEt_4]_6[La^{III}(WS_4)_3]_2$ as determined by the method disclosed in the experimental part and serving as example for compounds comprising the structural element of formula (V).

Figure 6 shows the crystal structure of $[NEt_4]_6[SM^{III}(MS_4)_3]_2$ as determined by the method disclosed in the experimental part and serving as example for compounds comprising the dimeric structural element of formula (V) and tetrathiomolybdate.

Figure 7 shows the crystal structure of $[NEt_4]_3[Y^{III}(MeCN)_2(MoS_4)_3]$ as determined by the method disclosed in the experimental part and serving as another example for compounds comprising the structural element of formula (IV) but comprising tetrathiomolybdate.

## Detailed description of the Invention

The invention also encompasses all combinations of all levels of preferential embodiments or parameter ranges as disclosed hereinafter either with each other or with the broadest disclosed parameter range or embodiment.

Whenever used herein the terms "including", "for example", "e.g.", "such as" and "like" are meant in the sense of "including but without being limited to" or "for example without limitation", respectively.

In step 1) of the inventive process a mixture of at least two compounds of formula (I) is reacted with the compounds of formula (II) i.e. thiometallates in the presence of at least one organic donor solvent.

As a starting material at least two compounds of formula (I) $MAn_3$ are employed.

In one embodiment, where An represents a monoanion such monoanion is specifically and preferably selected from the group consisting of: nitrate, sulfate, chloride, bromide, iodide, thiocyanate, perchlorate, hexafluorophosphate, tetrafluoroborate, phosphate, phosphonates $R^1PO_3^{2-}$, hydrogen phosphonates $R^1PO_3H^-$; organophosphinates $R_2^1PO_2^-$ or $R^1PO_2H^-$, sulfonates $R^1SO_3^-$, carboxylic acids $R^1CO_2^-$, wherein $R^1$ denotes alkyl or aryl.

Where 2 An together represent a dianion such dianion is specifically and preferably selected from the group consisting of disulfonates $R^2(SO_3^-)_2$, dicarboxylates $R^2(CO_2^-)_2$, wherein $R^2$ denotes alkane-diyl or aryl-diyl.

Where 3 An together represent a trianion such triianion is specifically and preferably selected from the group consisting of tricarboxylates $R^3(CO_2^-)_3$, wherein $R^3$ denotes alkane-triyl or aryl-triyl.

Where used above the alkyl, aryl, alkane-diyl, alkanetriyl, aryl, aryl-diyl and aryl-triyl substituents are

- either not, once, twice or more than twice interrupted by non-successive functional groups selected from the group consisting of:

$-O-$, $-NR^4-$

and

- either not, additionally or alternatively either once, twice or more than twice interrupted by bivalent residues selected from the group consisting of **heterocyclo-diyl, heteroaryl-diyl and** aryl-diyl,
and

- either not, additionally or alternatively either once, twice or more than twice substituted by substituents selected from the group consisting of:

oxo, halogen, cyano, phenyl, $C_1$-$C_8$-alkoxy, $C_1$-$C_8$-alkylthio, $-PO(N(R^5)_2)_2$, $PO(OR^5)_2$, $-SO_2N(_R{}^4)_2$, $-N(R^4)_2$, $-CO_2N(R^5)_2$, $-COR^4$, $-(CO)OR^4$,

wherein

$R^4$ is independently selected from the group consisting of hydrogen, $C_1$-$C_8$-alkyl, phenyl, and heterocyclyl or $N(R^4)_2$ as a whole is a N-containing heterocycle,

$R^5$ is independently selected from the group consisting of $C_1$-$C_8$-alkyl, phenyl, and heterocyclyl or $N(R^4)_2$ as a whole is a N-containing heterocycle

As used herein, and unless specifically stated otherwise, **aryl** denotes carbocyclic aromatic substituents, whereby said carbocyclic, aromatic substituents are unsubstituted or substituted by up to five identical or different substituents per cycle. For example and with preference, the substituents are selected from the group consisting of fluorine, bromine, chlorine, iodine, nitro, cyano, $C_1$-$C_8$-alkyl, $C_1$-$C_8$-alkoxy, $C_6$-$C_{14}$-aryl, in particular phenyl and naphthyl.

In a preferred embodiment, the carbocyclic, aromatic substituents are unsubstituted or substituted by up to three identical or different substituents per cycle selected from the group consisting of fluorine, chlorine, cyano, $C_1$-$C_8$-alkyl, $C_1$-$C_8$-haloalkyl, $C_1$-$C_8$-alkoxy, $C_1$-$C_8$-haloalkoxy, $C_6$-$C_{14}$-aryl, in particular phenyl.

In a more preferred embodiment the carbocyclic, aromatic substituents are unsubstituted or substituted by up to three identical or different substituents per cycle selected from the group consisting of fluorine, $C_1$-$C_8$-alkyl, $C_1$-$C_8$-perfluoroalkyl, $C_1$-$C_8$-alkoxy, $C_1$-$C_8$-perfluoroalkoxy, and phenyl.

The definitions given above, including their areas of preference, also apply analogously to **aryl-diyl** and **aryl-triyl** substituents. Preferred aryl substituents are $C_6$-$C_{14}$-aryl substituents, more preferably phenyl, naphthyl, phenanthrenyl and anthracenyl. The term $C_6$-$C_{14}$ indicates that the number of carbon atoms of the respective carbocyclic, aromatic ring system is from 6 to 14. The possible and preferred substitution patterns mentioned above are likewise applicable.

As used herein and unless specifically stated otherwise, **heterocyclyl** denotes heterocyclic aliphatic, aromatic or mixed aliphatic and aromatic substituents in which no, one, two or three skeleton atoms per cycle, but at least one skeleton atom in the entire cyclic system is a heteroatom selected from the group consisting of nitrogen, sulphur and oxygen which are unsubstituted or substituted by up to five identical or different substituents per cycle, whereby the substituents are selected from the same group as given above for carbocyclic aromatic substituents including the areas of preference.

Preferred heterocyclyl-substituents and heteroaryl-substituents respectively are pyridinyl, oxazolyl, thiophen-yl, benzofuranyl, benzothiophen-yl, dibenzofuranyl, dibenzothiophenyl, furanyl, indolyl, pyridazinyl, pyrazinyl, imidazolyl, pyrimidinyl and quinolinyl, either unsubstituted or substituted with one, two or three substituents selected from the group consisting of fluorine, $C_1$-$C_8$-alkyl, $C_1$-$C_8$-perfluoroalkyl, $C_1$-$C_8$-alkoxy, $C_1$-$C_8$-perfluoroalkoxy, and phenyl.

The definitions given above, including their areas of preference, also apply analogously to **heterocyclo-diyl** and **heteroaryl-diyl** substituents and **heterocyclylium and heteroarylium cations.**

As used herein, and unless specifically stated otherwise, **alkyl, alkane-diyl and alkane-triyl** are straight-chained, cyclic either in part or as a whole, branched or unbranched.

The term $C_1$-$C_{18}$-**alkyl** indicates that the straight-chained, cyclic either in part or as a whole, branched or unbranched alkyl substituent contains from 1 to 18 carbon atoms excluding the carbon atoms of optionally present substituents to the $C_1$-$C_{18}$-alkyl substituent. The same analogously applies to **alkyl, alkane-diyl and alkane-triyl** and further substituents having an indicated number of carbon atoms.

Specific examples of $C_1$-$C_4$-alkyl are methyl, ethyl, n-propyl, isopropyl, n-butyl, tert-butyl. Additional examples for $C_1$-$C_8$-alkyl are n-pentyl, cyclohexyl, n-hexyl, n-heptyl, n-octyl, isooctyl. Additional examples for $C_1$-$C_{18}$-alkyl are norbornyl, adamantyl, n-decyl, n-dodecyl, n-hexadecyl, n-octadecyl.

Specific examples of $C_1$-$C_8$-alkane-diyl-substituents are methylene, 1,1-ethylene, 1,2-ethylene, 1,1-propylene, 1,2-propylene, 1,3-propylene, 1,1-butylene, 1,2-butylene, 2,3-butylene and 1,4-butylene, 1,5-pentylene, 1,6-hexylene, 1,1-cyclohexylene, 1,4-cyclohexylene, 1,2-cyclohexylene and 1,8-octylene.

Specific examples of $C_1$-$C_4$-alkoxy-substituents are methoxy, ethoxy, isopropoxy, n-propoxy, n-butoxy and tert-butoxy. An additional example for $C_1$-$C_8$-alkoxy is cyclohexyloxy.

As used hereinabove, $C_1$-$C_8$-**haloalkyl** and $C_1$-$C_8$-**haloalkoxy** are $C_1$-$C_8$-**alkyl** and $C_1$-$C_8$-**alkoxy** sustituents which are once, more than once or fully substituted by halogen atoms. Substituents which are fully substituted by fluorine are referred to as $C_1$-$C_8$-**perfluoroalkyl** and $C_1$-$C_8$-**perfluoroalkoxy,** respectively.

Specific examples of $C_1$-$C_8$-haloalkyl-substituents are trifluoromethyl, 2,2,2-trifluoroethyl, chloromethyl, fluoromethyl, bromomethyl, 2-bromoethyl, 2-chloroethyl, nonafluorobutyl and n-perfluorooctyl.

In a preferred embodiment An denotes perchlorate, hexafluorophosphate, tetrafluoroborate, methanesulfonate (mesylate), p-methylphenylsulfonate (tosylate), trifluoromethylsulfonate (triflate) and trifluoroacetate and 3 An together denote citrate, whereby methanesulfonate (mesylate) and trifluoromethanesulfonate (triflate) are more preferred.

According to the inventive process at least two compounds of formula (I) comprising at least two different rare earth elements M are employed in the process.

In one embodiment the compounds of formula (I) are selected that the mixture of compounds of formula (I) comprises either two, three, four, five, six, seven, eight, nine, ten, eleven, twelve, thirteen, fourteen, fifteen, sixteen or seventeen different rare earth elements M.

The compounds of formula (I) are reacted with compounds of formula (II)

$$Cat_2(MetS_xO_{(4-x)}) \qquad (II)$$

Where Cat is a monocation in a preferred embodiment denotes an alkali metal ion, such as lithium, sodium, potassium, rubidium and cesium, preferably sodium or potassium, or is an ammonium ion or a primary, secondary, tertiary or quaternary organic ammonium ion, in particular those of formula $[N(C_1$-$C_{18}$-alkyl$)_sH_t]^+$ wherein s is 1, 2, 3 or 4 and t is (4-s), or is a guanidinium ion or an substituted guanidinium ion $^+NHR^6$=$C[N(C_1$-$C_{18}$-alkyl$)_yH_z]_2$ wherein y is independently from the other y and each other either 1 or 2 and z is (2-y) and $R^6$ denotes hydrogen or $C_1$-$C_{18}$-alkyl, or is a phosphonium ion $[PR^7]_4^+$, wherein $R^7$ denotes alkyl or aryl, preferably aryl such as phenyl; or is a heterocyclylium cation, for example pyrimidinium or is heteroarylium, for example pyridinium.

Where $Cat_2$ is a dication in a preferred embodiment denotes an primary, secondary, tertiary or quaternary organic diammonium ion, in particular those of formula $^+[N(C_1$-$C_{18}$-alkyl$)_sH_t]$-$R^8$-$[N(C_1$-$C_{18}$-alkyl$)_sH_t]^+$ wherein s is 0, 1, 2 or 3 and t is 3-s or is a heteroarylium dication, for example bi-pyridinium.

In a preferred embodiment Cat denotes a quaternary organic ammonium ion whereby tetraethylammonium is preferred.

In another preferred embodiment $(MetS_xO_{(4-x)})$ as a whole denotes tetrathiomolybdate $MoS_4^{2-}$ or tetrathiotungstate $WS_4^{2-}$, whereby tetrathiotungstate $WS_4^{2-}$ is preferred.

Step 1) of the process is carried out in the presence of at least one organic donor solvent preferably a donor solvent capable of coordinating to rare earth metal ions M.

Suitable organic donor solvents include alcohols, for example methanol, ethanol, isopropanol, n-propanol, n-butanol, 2-butanol, n-pentanol, n-hexanol and cyclohexanol; ethers, for example diethyl ether, tert-butyl methyl ether, dioxane, tetrahydrofuran, tetrahydropyran, 1,1-dimethoxymethane, 1,2-dimethoxyethane, diethylene glycol dimethyl ether, tetraethylene gycol dimethyl ether; nitriles, for example acetotonitrile, benzonitrile and benzylnitrile; isonitriles for example cyclonhexylisonitrile; amines, for example diethylamine, trimethylamine, tri-n-propylamine, di-n-propylamine, diisopropylamine, triisopropylamine, piperidine and pyrrolidine; amides, for example formamide, acetamide, and dimethylacetamide; esters, for example acetic acid methyl ester and acetic acid ethyl ester, heteroaryls, for example pyridine, 2-, 3- or 4-methylpyridine, imidazole, 1-methylimidazole, pyrimidine, pyrrole and chinoline and any mixture of aforementioned solvents or solvent types.

Preferred organic donor solvents are nitriles, for example acetonitrile, benzonitrile and benzylnitrile, whereby acetonitrile is preferred.

In one embodiment the compounds of formula (I) are reacted with compounds of formula (II) in solution.

As used herein "in solution" means that either compounds of formula (I) or the compounds of formula (II) or all compounds of formulae (I) and (II) are provided as solutions to be reacted.

"In solution" further means that the compounds of the solution are at least substantially, for example to at least 95 wt-%, preferably 98 wt-%, for example are fully dissolved.

The solvent to produce the solution may be the at least an organic donor solvent either neat or in combination with another organic solvent such as aliphatic hydrocarbons, for example pentane, hexane, heptane, octane and long-chain unbranched or branched aliphatic hydrocarbons, cyclohexane, methylcyclohexane, petroleum ether having different boiling ranges and paraffin oils, aromatic hydrocarbons, for example benzene, toluene, o-, m- or p-xylene and mesitylene, and aromatic chlorohydrocarbons such as chlorobenzene or the isomeric chlorotoluenes, sulfones like dimethylsulfone, tetramethylene sulfone and also any mixture of such solvents.

In another embodiment the compounds of formula (I) are reacted with compounds of formula (II) without being in solution. In this embodiment the compounds are reacted in the presence of the organic donor solvent either neat or in combination with another organic solvent such as those mentioned above or any mixture thereof. While the reaction proceeds compounds of formulae (I) and (II) are dissolving while the precipitates are formed simultaneously or after dissolution. The presence of water is in principle possible but adds no advantage. In one embodiment of the invention the water content of the solvent is therefore less than 20 wt.-%, preferably less than 5 wt.-% and even more preferably less than 0.5 wt.-%.

The molar ratio of compounds of formula (II) to compounds of formula (I) is for example in the range of from 1 to 1000, preferably 2.8 to 12.0 and more preferably 3.0 to 5.0. A further excess of compounds of formula (II) are possible but add no advantage. The amount of organic donor solvents to be applied in step 1) is dependent on the type, solubility and amount of compounds of formula (I) and may be determined by one skilled in a very few orienting examples. For example the amount of organic donor solvent may be chosen to be in the range of 1 to 1000, preferably in the range of 3 to 1000 times with respect to the molar ratio of organic donor solvent and compounds of formula (I).

The reaction temperature in step 1) is not critical and may be in the range of from the freezing point of the solvent to its boiling point or the boiling point of the lowest component thereof. In one embodiment the reaction temperature is in the range of from -40 °C to 100 °C, preferably -35° to 60 °C and more preferably 0° to 50 °C. The reaction pressure in step 1) is not critical and may be for example in the range of 500 hPa to 10 MPa, preferably the process is carried out under ambient pressure.

Upon reaction of compounds of formula (I) with compounds of formula (II) in the presence of an organic donor solvent compounds comprising the structural elements of formula (III) and/or (IV) and/or (V) are formed and the least soluble ones typically form the precipitates as outlined in the summary of the invention. To aid precipitation cooling or partial removal of solvents in usual manner e.g. by applying a vacuum can be performed.

As an alternative, solvents in which the compounds comprising the structural elements of formula (III) and/or (IV) and/or (V) are less soluble may be added to fulfil the same purpose.

It is a major finding of the invention that the solubility of the rare earth metal thiolates comprising the structural units according to formulae (III) to (V) obtained in step 1) of the inventive process differ substantially and by around an order of magnitude depending on the oxidation state for Europium, Ytterbium, Samarium, Thulium and Dysprosium being either (+II) or (+III) and/or which type rare earth element M is employed in combination with which thiometallates.

Compounds where M is La, Ce, Pr, Pm, Nd or Sm were found to form compounds comprising the structural units of formula (V), a dimeric structure.

Compounds of rare earth elements M being Sc, Y, Nd, Sm, Gd, Tb, Dy, Ho, Er, Tm, Yb or Lu in the oxidation state (+III) were found to form compounds comprising the structural units of formula (IV), in particular where Met is W, as does Europium in the oxidation state (+III).

Compounds of Europium, Ytterbium, Samarium, Thulium and Dysprosium in the oxidation state (+II) form compounds comprising the structural units of formula (III) having a polymeric structure.

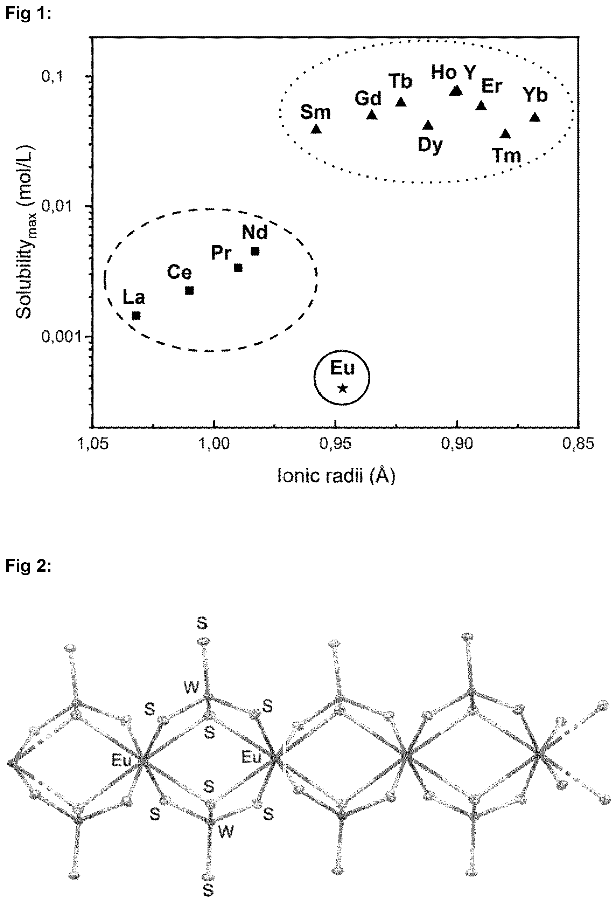

This special coordination and redox behavior makes the inventive compounds perfectly suitable for separation by precipitation in particular crystallization. An overview of solubilities is given in Figure 1 for the respective thiotungstates $(WS_4^{2-})$.

Without wanting to be bound by theory the Europium compounds comprising the structural element of formula (III) are formed upon the internal reduction of Europium(III) to Europium(II) by a sulfur atom of the thiometallates. The required electron transfer can be for example be triggered by temperatures above -20°C or by exposure of the reaction mixture in step 1) to light, whereby ambient daylight is sufficient. As a consequence a coordination polymer with the Europium centers being coordinated just by the sulfur donors of the thiometallates is formed as can be seen in the crystallographic structure of figure 2. If the same reaction is carried out at temperatures lower than - 30°C and under exclusion of light for the reduction of Europium(III) is not observed immediately and compounds comprising the structural element of formula (IV) are formed like for all other rare earth elements.

It is apparent to those skilled in the art that the reduction of Europium (III) to Europium (II) does not take place at a certain temperature but is time and temperature dependent following certain kinetics meaning that reduction could also be observed at lower temperatures upon longer storage. However the above temperatures were confirmed for reaction times of several hours.

In one embodiment the reduction of Ytterbium, Samarium, Thulium and Dysprosium to their oxidation state (+II) also leads to formation of compounds comprising the structural units of formula (III). Such conditions could for example include irradiation with UV-Light, in particular for Ytterbium, or addition of a reducing agent such as cobaltocene or decamethylcobaltocene or a reducing metal like zinc or tin, or a reducing gas like dihydrogen. Alternatively the reduction may be accomplished electrochemically by applying a sufficient potential, preferably while not consuming a sacrificial reducing agent.

Since the separation process not only allows easy separation of compounds of different rare earth elements M, but in particular even more easy separation of groups of rare earth elements M due the aforementioned different complexation and redox behavior in one preferred embodiment the at least two compounds of formula (I) comprising at least two different rare earth elements M are selected from at least two different of the three groups wherein in

| Group A: | M is La, Ce, Pr, Pm, Nd or Sm |
| Group B: | M is Eu, Yb, Sm, Tm, Dy |
| Group C: | M is Sc, Y, Nd, Sm, Gd, Tb, Ho, Er,or Lu |

in particular and more preferably where Met is W.

This preferred embodiment is in particular preferred where step 1) of the process according to the invention is carried out while or before reducing Ytterbium and/or Samarium and/or Dysprosium and/or Europium, i.e. by applying reductive conditions as described above.

For this preferred embodiment the compounds of formula (I) are in one exemplary embodiment selected such that they, taken in total, comprise either one, two, three, four or all five of the rare earth elements M of Group A) and one, two, three, four or all five of the rare earth elements M of Group B). In this embodiment the process allows in particular to separate the thiometallates of Group A) elements M from thiometallates of Group B) elements M.

For the above preferred embodiment the compounds of formula (I) are in another exemplary embodiment selected such that they, taken in total, comprise either one, two, three, four, five, six or all seven of the rare earth elements M of Group C) and one, two, three, four or all five of the rare earth elements M of Group B). In this embodiment the process allows in particular to separate the thiometallates of Group C) elements M from thiometallates of Group B) elements M.

For the above preferred embodiment the compounds of formula (I) are in yet another exemplary embodiment selected such that they, taken in total, comprise either one, two, three, four or all five of the elements M of Group A), and either one, two, three, four or all five of the rare earth elements M of Group B) and either one, two, three, four, five, six or all seven of the rare earth elements M of Group C). In this embodiment the process allows in particular to separate the thiometallates of Group C) elements M from thiometallates of Group B) elements M and thiometallates of Group A) elements M.

Since the process also allows separation of different rare earth elements M within Group A) or within Group B) or within Group C) this separation could optionally form part of a second step once the compounds comprising rare earth elements M of Group A) or the compounds comprising rare earth elements M of Group C) are separated from compounds comprising rare earth elements M of Group B) in a first step.

Since the process also allows separation of different elements M within Group A) or within Group C) this separation could optionally, if desired, form part of a third step to obtain the single compounds of elements M of Group A) and/or Group C).

In another preferred embodiment the at least two compounds of formula (I) comprising at least two different rare earth elements M are selected from at least two different of the three groups wherein in

| Group A: | M is La, Ce, Pr, Pm or Nd |
| Group B: | M is Eu |
| Group C: | M is Sc, Y, Gd, Tb, Ho, Er, Tm, Yb, Sm, Dy or Lu |

in particular and more preferably where Met is W.

This preferred embodiment is in particular preferred where step 1) of the process according to the invention is carried without reducing Ytterbium and/or Samarium and/or Dysprosium but using the auto reduction observed and described for Europium above.

For this alternative preferred embodiment the compounds of formula (I) are in one exemplary embodiment selected such that they, taken in total, comprise either one, two, three, four or all five of the rare earth elements M of Group A) and Europium of Group B). In this embodiment the process allows in particular to separate the thiometallates of Group A) elements M from Europium(II)thiometallates.

For the above alternative preferred embodiment the compounds of formula (I) are in another exemplary embodiment selected such that they, taken in total, comprise either one, two, three, four, five, six, seven, eight, nine, ten or all eleven rare earth elements M of Group C) and Europium of Group B). In this embodiment the process allows in particular to separate the thiometallates of Group C) elements M from Europium(II) thiometallates.

For the above alternative preferred embodiment the compounds of formula (I) are in yet another exemplary embodiment selected such that they, taken in total, comprise either one, two, three, four or all five of the elements M of Group A), and Europium of Group B) and either one, two, three, four, five, six, seven, eight, nine, ten or all eleven of the rare earth elements M of Group C). In this embodiment the process allows in particular to separate the thiometallates of Group C) elements M from thiometallates of Group A) elements M and Europium(II) thiometallates.

Since the process also allows separation of different rare earth elements M within Group A) or within Group C) this separation could optionally form part of a further step once the thiometallates of Group A) elements M and/or thiometallates of Group C) elements M are separated from Europium(II) thiometallates in one or two previous steps.

Compounds comprising the structural units of formula (III) include those of formula (IIIa):

$$\text{Cat}_2[\text{M}^{II}(\text{MetS}_4)_2]_n \qquad \text{(IIIa)}$$

wherein Cat, M and Met have the meaning including its preferential meanings set forth for formula (III) above and n denotes an integer of larger than 1 indicating a polymeric structure.

Specific compounds of formulae (III) and (IIIa) are: $[\text{NEt}_4]_2[\text{Eu}^{II}(\text{WS}_4)_2] \cdot 2(\text{MeCN})$; $[\text{NEt}_4]_2[\text{Yb}^{II}(\text{WS}_4)_2] \cdot 2(\text{MeCN})$, $[\text{NEt}_4]_2[\text{Sm}^{II}(\text{WS}_4)_2] - 2(\text{MeCN})$ and $[\text{NEt}_4]_2[\text{Dy}^{II}(\text{WS}_4)_2] \cdot 2(\text{MeCN})$.

Specific compounds comprising the structural units of formula (IV) include those of formula (IVa):

$$\text{Cat}_3[\text{M}^{III}\text{L}_z(\text{MetS}_4)_3] \qquad \text{(IVa)}$$

wherein Cat, M, Met, L and z have the meaning including its preferential meanings set forth for formula (IV) above.

Specific compounds of formulae (IV) and (IVa) are:

$[\text{NEt}_4]_3[\text{Sm}^{III}(\text{MeCN})_2(\text{WS}_4)_3]$, $[\text{NEt}_4]_3[\text{Gd}^{III}(\text{MeCN})_2(\text{WS}_4)_3]$, $[\text{NEt}_4]_3[\text{Y}^{III}(\text{MeCN})(\text{WS}_4)_3]$ $[\text{NEt}_4]_3[\text{Tb}^{III}(\text{MeCN})(\text{WS}_4)_3]$, $[\text{NEt}_4]_3[\text{Dy}^{III}(\text{MeCN})(\text{WS}_4)_3]$, $[\text{NEt}_4]_3[\text{Ho}^{III}(\text{MeCN})(\text{WS}_4)_3]$, $[\text{NEt}_4]_3[\text{Er}^{III}(\text{MeCN})(\text{WS}_4)_3]$, $[\text{NEt}_4]_3[\text{Tm}^{III}(\text{MeCN})(\text{WS}_4)_3]$, $[\text{NEt}_4]_3[\text{Yb}^{III}(\text{MeCN})(\text{WS}_4)_3]$ and $[\text{NEt}_4]_3[\text{Lu}^{III}(\text{MeCN})(\text{WS}_4)_3]$, $[\text{NEt}_4]_3[\text{Sc}^{III}(\text{WS}_4)_3]$, $[\text{NEt}_4]_3[\text{Ho}^{III}(\text{MeCN})(\text{MoS}_4)_3]$, $[\text{NEt}_4]_3[\text{Er}^{III}(\text{MeCN})(\text{MoS}_4)_3]$, $[\text{NEt}_4]_3[\text{Yb}^{III}(\text{MeCN})(\text{MoS}_4)_3]$ and $[\text{NEt}_4]_3[\text{Y}^{III}(\text{MeCN})(\text{MoS}_4)_3]$.

Specific compounds comprising the structural units of formula (V) include those of formula Va):

$$\text{Cat}_6[\text{M}^{III}(\text{MetS}_4)_3]_2 \qquad \text{(Va)}$$

wherein Cat, M and Met have the meaning including its preferential meanings set forth for formula (V) above.

Specific compounds of formulae (V) and (Va) are:

$[\text{NEt}_4]_6[\text{La}^{III}(\text{WS}_4)_3]_2$, $[\text{NEt}_4]_6[\text{Ce}^{III}(\text{WS}_4)_3]_2$, $[\text{NEt}_4]_6[\text{Pr}^{III}(\text{WS}_4)_3]_2$, $[\text{NEt}_4]_6[\text{Pm}^{III}(\text{WS}_4)_3]_2$, , $[\text{NEt}_4]_6[\text{Nd}^{III}(\text{WS}_4)_3]_2$ and $[\text{NEt}_4]_6[\text{Sm}^{III}(\text{MoS}_4)_3]_2$.

For the avoidance of doubt the above nomenclature for compounds of formulae (IIIa), (IVa), (IVb) and (Va) as well as the listed single compounds include the compounds as given in the formula as well as compounds having additional solvent molecules in their crystallized form.

In step 2) the precipitate formed in step 1) is separated from the residual solution. Such separation can be accomplished by any manner and in any vessel known to those skilled in the art for that purpose. This includes sedimentation and decantation, centrifugation and filtration.

Due to the unique separation efficiency in a single step, the process according to the invention is in particular suitable to form part of a process wherein the thiometallates are recycled and marketable commodity compounds of REEs are prepared.

Therefore the separation process may further contain a further step

3) reacting the compounds comprising the structural elements of formulae (III) or (IV) or (V) with at least one compound of formula (VI)

$$\text{Cat}_2\text{An}^2 \qquad (VI)$$

wherein Cat denotes a monocation as defined above, preferably ammonium an

An$^2$ denotes oxalate, carbonate, sulfate or two equivalents of hydroxide or hydrogen carbonate, preferably oxalate

thereby obtaining compounds of formulae (VII) from compounds comprising the structural element of formula (III)

$$\text{MAn}^2 \qquad (VII)$$

or compounds of formulae (VIII) from compounds comprising the structural element of formulae (IV) or (V)

$$\text{M}_2\text{An}^2{}_3 \qquad (VIII)$$

wherein M has the same meaning including its area of preference as defined for formula (I). Where compounds comprising the structural element of formulae (IV) or (V) are obtained as a solution, step 3) may be preceded by removal of the solvent e.g. by distillation or evaporation or by addition of a solvent wherein such compounds are less soluble to aid precipitation.

Step 3) may be carried out in water.

Specific compounds of formula (VI) are ammonium oxalate, sodium oxalate and potassium oxalate, whereby ammonium oxalate is preferred.

A specific compound of formula (VII) are Europium(II)oxalate.

Specific compounds of formula (VIII) are Scandium(III)oxalate, Yttrium(III)oxalate, Scandium(III)oxalate, Lanthanum(III)oxalate, Cerium(III)oxalate, Praeseodymium(III)-oxalate, Neodymium(III)oxalate, Promethium(III)oxalate, Samarium(III)oxalate, Gadolinium(III)oxalate, Terbium(III)oxalate, Dysprosium(III)-oxalate, Holmium(III)-oxalate, Erbium(III)oxalate, Thulium(III)oxalate, Ytterbium(III)oxalate and Lutetium(III)-oxalate.

By performing step 3) compounds of formula (II) are recovered and may be recycled into in step 1) either directly or after changing the cation by known methods.

The compounds of formulae (VII) and (VIII) may be converted to common rare earth metal oxides by step 4) calcinating compounds of formula (VII) or (VIII) at a temperature of 500°C or more, preferably between 500 and 1200°C, more preferably between 600° and 1000°C.

The process according to the invention is suitable in all processes where separation or purification of REEs is important. This includes recycling processes for electronic materials, REE separation from mixed REE concentrates which are typically mixed oxides obtained from REE ores or extraction of other sources of REEs such as coal ashes and ashes obtained by burning electronic waste or waste comprising electronic components, as well as the separation of REEs from actinides in the workup of used nuclear fuels.

Irrespective of the aforementioned processes, compounds of formula (I) may be obtained according to standard procedures known to those skilled in the art.

In a specific embodiment the compounds of formula (I) are obtained by

i) reacting materials comprising rare earth metal compounds with acids of formula (IX)

$$\text{H}_m\text{-An}^3{}_m \qquad (IX)$$

wherein An$^3{}_m$ as a whole is a m-valent anion and m is 1, 2 or 3

in water to form aqueous solutions of compounds of formula (I)

ii) optionally separating the aqueous solutions of compounds of formula (I) from remaining solids

iii) optionally exchanging the m-valent anion An$^3{}_m$ by an anion An as defined above and preferably as defined above as specific and preferred embodiment

iv) drying

whereby the sequence of optional steps 2) and 3) may be changed.

The optional step of separating the aqueous solutions of compounds of formula (I) from remaining solids may be accomplished e.g. by filtration, centrifugation, decantation or any other method known to those skilled in the art for that purpose.

The optional step of exchanging anions may be accomplished e.g. by anion exchange on anion exchange resins, by anion exchange utilizing different salt solubilities or any other method known to those skilled in the art for that purpose.

As used herein above materials comprising rare earth metal compounds encompass rare earth element ores like for example Monazite, Bastnäsite, Synchisite, Gadolinite, Samarskite, Euxenite, Pyrochlore or mixtures thereof.

Other examples include rare earth metal concentrates such as mixed rare earth metal oxides, carbonates or hydroxides.

Further examples include electronic waste materials such as for example large and small appliances, screens and monitors, telecommunication devices such as computers and mobile phones, magnets, fluorescent lamps, whereby screens, monitors and fluorescent lamps are preferred.

A major advantage of the present invention is the possibility to separate rare earth metal compounds by an easy and efficient process without the necessity of harsh conditions, numerous chemicals or process steps.

In the following, the present invention is illustrated by examples which however are not intended to limit the scope of invention.

### Experimental section:

### I Chemicals and Methods

### 1 General

Unless stated otherwise, syntheses were carried out under strict inert Argon atmosphere using Schlenk techniques or inside Vigor® gloveboxes. Diethyl ether and acetonitrile were dried using a Vigor® solvent purification system. Diethyl ether was additionally dried over potassium/benzophenone, distilled, degassed by three freeze-pump-thaw cycles and stored over 4 Å molecular sieves for at least three days prior to use. Likewise, acetonitrile was degassed by three freeze-pump-thaw cycles and stored over 3 Å molecular sieves prior to use.

Tungstic acid $H_2WO_4$ was purchased from Fluka. Europium(III)oxide $Eu_2O_3$ was purchased from Sigma-Aldrich and Yttrium(III)oxide $Y_2O_3$ from Ventron. Ammonium thiotungstate $(NH_4)_2WS_4$ and Tetraethylammonium tetrathiotungstate $(NEt_4)_2[WS_4]$ and tetrathiomolybdate $(NEt_4)_2[MoS_4]$ were synthesized according to [13] McDonald, J. W.; Friesen, G. D.; Rosenhein, L. D.; Newton, W. E., Syntheses and characterization of ammonium and tetraalkylammonium thiomolybdates and thiotungstates. Inorganica Chim. Acta 1983, 72, 205-210.

### 2 Analytics

X-ray Crystallography data was detector using MoKa radiation ($\lambda$ = 0.71073 Å) or CuKa radiation ($\lambda$ = 1.54184 Å) at 100 K. After data collection, structures were solved by intrinsic phasing (SHELXT) and refined by full- matrix least-squares procedures on $F^2$ using SHELXL in the olex2 program suite [14] G. M. Sheldrick, Acta Cryst., 2015, 71, 3-8. 7., [15] G. M. Sheldrick, Acta Cryst., 2008, 64, 112-122. All non-hydrogen atoms were refined with anisotropic displacement parameters. The hydrogen atoms were placed in positions of optimized geometry.

NMR spectra were recorded on a 200 MHz Bruker Avance spectrometer.

UV-Vis electronic absorption data were collected on an Agilent Cary 60 UV-Vis Spectrophotometer, which was connected to a sampling probe (d=2 mm) inside the Glovebox with an optical fiber. Maximum solubility was determined using UV-Vis spectroscopy, by fitting the absorbance of a saturated solution with a calibration curve.

Raman Spectroscopy spectra were collected using a Thermo Scientific DXR SmartRaman spectrometer and data were processed with the OMNIC software. Measurements were realized at a fixed power (10 mW) under irradiation at 532 nm with a 50 $\mu$m slit aperture.

Elemental analyses were carried out in the Mikrolabor of ETH Zürich on a LECO TruSpec® Micro spectrometer.

X-ray photoelectron spectroscopy (XPS) was performed on a Sigma 2 instrument (Thermo Fisher Scientific) equipped with an UHV chamber (non-monochromatic 200 W Al K$\alpha$ source, a hemispherical analyzer, and a seven channel electron multiplier). The C 1s peak of adventitious carbon was set at 284.8 eV to compensate for any charge induced shifts.

XPS data was analyzed using CasaXPS software. Quantification of the Eu/Y At% were obtained by fitting the data with a Linear Baseline for the Eu 3d region between 1132 and 1112 eV and for the Y 3p region between 318 and 308 eV.

Inductively Coupled Plasma Optical Emission spectroscopy (ICP-OES) measurements were carried out with an Agilent 5110 instrument (Agilent Technologies, Inc.) equipped with a double-pass spray chamber and a SeaSpray concentric glass nebulizer. During the measurements, the instrument was operated in its axial mode, with 0.7 L·min$^{-1}$

nebulizer flow (Ar), 12 l·min$^{-1}$ plasma flow (Ar), 1 L.min$^{-1}$ auxiliary flow (Ar), and 1.2 kW RF power. The instrument was calibrated externally from single-element standards (1000 mg/L, TraceCERT$^®$, Merck KGaA, Germany) and their dilutions, allowing Eu and Y to be quantified with the 381.967 nm and 360.074 nm spectral lines, respectively. The samples were prepared by dissolution in analytical grade concentrated $HNO_3$ and a subsequent dilution with milliQ water (18.2 mΩ). In some samples, yellow $WO_3$ residue had to be filtered off by a 0.45 μm syringe filter.

## 3 Examples

Example 1: Synthesis of $(NH_4)_2WS_4$:

$H_2WO_4$ (10 g, 40 mmol) was treated with aqueous ammonia $NH_3$ (25 wt-%, 80 mL), and the solution was saturated with an excess of $H_2S$. $H_2S$ was generated in situ from iron(II) sulfide (FeS) and 1 M sulfuric acid ($H_2SO_4$) using a Kipp's apparatus. Evolution of toxic $H_2S$ gas was quenched using gas-wash bottles filled first with sodium hypochlorite and secondly with 1 M potassium hydroxide (KOH).

After 1 h of stirring and color changes from pale white over lime-green to bright green, the solution was heated gradually to 55 °C over a period of 1 h, cooled down to room temperature, and stirred overnight. After that time the formation of a yellow solid was observed. The solid product was isolated by filtration, washed with isopropanol (3 x 25 mL) and diethyl ether (3 x 25 mL), and dried in vacuo to give a yellow powder (10.12 g, 29.1 mmol, yield: 71% of theory).

Elemental analysis found (calculated) % for $H_8N_2WS_4$: H, 2.38 (2.32); N, 8.24 (8.05).

UV spectrum ($H_2O$) $\lambda_{max}$ (nm)($\varepsilon$ ($M^{-1}cm^{-1}$)): 393 (15 000), 278 (22 900), 216 (28 000).

Example 2: Synthesis of $(NEt_4)_2WS_4$:

$(NH_4)_2WS_4$ prepared in example 1 (4.9 g, 14 mmol) was dissolved in tetraethylammonium hydroxide $NEt_4OH$ (25 wt-% in $H_2O$, 16 mL) and degassed $H_2O$ (20 mL) was added. The solution was subjected to pumping for 2 h, before isopropanol (150 mL) was added, and the bright yellow precipitate was allowed to settle at 0 °C. The supernatant was removed by cannula filtration and the solid was washed with isopropanol (2 x 50 mL) and diethyl ether (2 x 50 mL), and dried in vacuo overnight. The crude product was extracted with acetonitrile (MeCN) and dried in vacuo overnight, yielding bright yellow crystals (6.06 g, 10.6 mmol, yield: 75% of theory).

Elemental analysis found (calculated) % for $C_{16}H_{40}N_2WS_4$: C, 33.60 (33.56); H, 7.03 (7.04); N, 5.10 (4.89).

UV spectrum (MeCN) $\lambda_{max}$ (nm)($\varepsilon$ ($M^{-1}cm^{-1}$)) : 399 (18 700), 283 (24 700), 223 (28 100).

Example 3: Synthesis of Europium(III) triflate $Eu(OTf)_3$:

The synthesis was performed under aerobic conditions in a well-ventilated fumehood. In a 100 mL round-bottomed flask, miliQ water $H_2O$ (2 mL) was added by syringe to anhydrous trifluoromethanesulfonic acid (2 mL) at 0 °C. The reaction was stirred until fuming stopped. Afterwards, Europium(III)oxide $Eu_2O_3$ (5.73 mmol) was added portion wise under strong stirring, and the suspension was heated at 110 °C for 2 h. The reaction was allowed to cool down to room temperature and diluted with water (50 mL). Filtration of the supernatant with Acrodisc$^®$ Syringe Filters (0.2 μm, 13 mm) resulted in a clear and colorless solution which was dried under vacuum to afford a white powder. The triflates were dried under vacuum (1 Pa) at 170°C for 24 h prior to use (yield: quantitative). $^{19}$F NMR (282 MHz, $D_2O$): d [ppm] -78.84 (s).

Example 4: Synthesis of Yttrium(III) triflate $Y(OTf)_3$:

The synthesis was performed under aerobic conditions in a well-ventilated fumehood. In a 100 mL round-bottomed flask, miliQ water $H_2O$ (2 mL) was added by syringe to anhydrous trifluoromethanesulfonic acid (2 mL) at 0 °C. The reaction was stirred until fuming stopped. Afterwards, Yttrium(III)oxide $Y_2O_3$ (5.73 mmol) was added portion wise under strong stirring, and the suspension was heated at 110 °C for 2 h. The reaction was allowed to cool down to room temperature and diluted with water (50 mL). Filtration of the supernatant with Acrodisc$^®$ Syringe Filters (0.2 μm, 13 mm) resulted in a clear and colorless solution which was dried under vacuum to afford a white powder. The triflates were dried under vacuum (1 Pa) at 170°C for 24 h prior to use
$^{19}$F NMR (282 MHz, $D_2O$): d [ppm] -78.8 (s).

Example 5: Synthesis of $[NEt_4]_2[Eu^{II}(WS_4)_2]·2(MeCN)$

In a 25 mL scintillation vial, $(NEt_4)_2WS_4$ prepared in example 2 (100 mg, 0.174 mmol, 3 equivalents) was solubilized in 5 mL of MeCN resulting in a bright yellow solution. The latter was treated with $Eu(OTf)_3$ prepared in example 3 (34.8 mg, 0.058 mmol, 1 equivalent) resulting in an immediate color change to dark red greenish solution. After one hour a golden brown precipitate was already visible. The reaction was stirred at room temperature for 24 h, before the solution was filtered on a porcelain 4 frit resulting in a golden brown powder which was further dried under vacuum (69,7 mg, 0.062 mmol, yield: 100 % of theory).

The crystal structure is shown in figure 2.

Example 6: Synthesis of [NEt$_4$]$_3$[Eu$^{III}$(MeCN)$_2$(WS$_4$)$_2$]·MeCN

In a 25 mL scintillation vial, [NEt$_4$]$_2$[WS$_4$] prepared in example 2 (100 mg, 0.174 mmol, 3 equivalents) was solubilized in 5 mL of MeCN resulting in a bright yellow solution. The latter was treated with Eu(OTf)$_3$ prepared in example 3 (31.2 mg, 0.058 mmol, 1 equivalent) resulting in an immediate color change to dark red greenish. The reaction was left to stand at -35 °C for 24 h before it was layered in the dark with pentane (2 mL) and diethyl ether (5 mL) and crystallization was set at -35 °C. After a day, dark red crystals were isolated by pipetting out the supernatant, washed with pentane (2 x 2 mL) and dried under vacuum (90 mg, 0.057, yield: 99 % of theory).

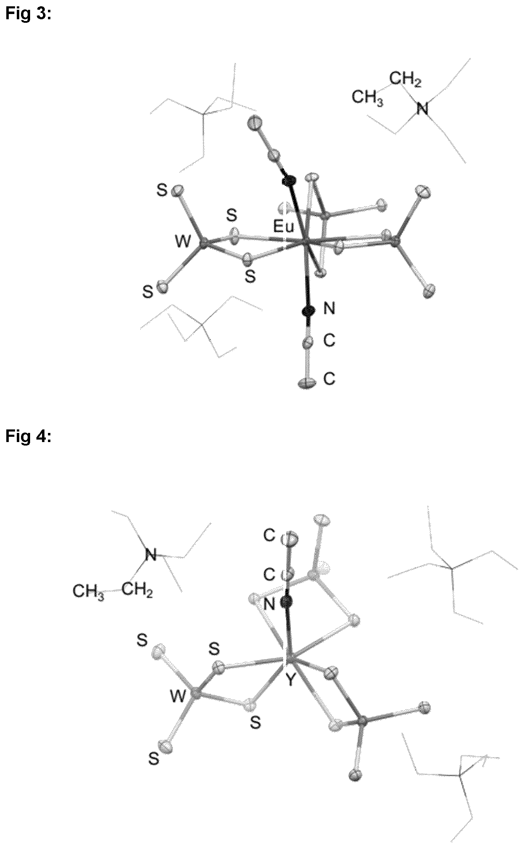

The crystal structure is shown in figure 3.

Example 7: Synthesis of [NEt$_4$]$_3$[Y$^{III}$(MeCN)$_2$(WS$_4$)$_2$]·MeCN

In a 25 mL scintillation vial, [NEt$_4$]$_2$[WS$_4$] prepared in example 2 (100 mg, 0.174 mmol, 3 equivalents) was solubilized in 5 mL of MeCN resulting in a bright yellow solution. The latter was treated with Y(OTf)$_3$ prepared in example 4 (31.2 mg, 0.058 mmol, 1 equivalent) resulting in an immediate color change to bright orange. The reaction was stirred at room temperature for 24 h before it was layered with pentane (2 mL) and diethylether (5 mL) and crystallization was set at -35 °C. After a day, red crystals were isolated by pipetting out the supernatant, washed with pentane (2 x 2 mL) and dried under vacuum (82 mg, 0.056, yield: 97 % of theory).

The crystal structure is shown in figure 4.

Example 8: Synthesis of [NEt$_4$]$_6$[La$^{III}$(WS$_4$)$_3$]$_2$ ; [NEt$_4$]$_3$[M$^{III}$(MeCN)$_2$(WS$_4$)$_3$] (M=Sm and Gd) and [NEt$_4$]$_3$[M(MeCN)(WS$_4$)$_3$] (M=Tb-Yb and Y)

In a 20 mL scintillation vial, (NEt$_4$)$_2$WS$_4$ (100.0 mg, 0.18 mmol, 3 equivalents) was solubilized in the minimum of MeCN (ca. 5 mL) under stirring, resulting in a bright yellow solution. Then, M (OTf)$_3$ (0.06 mmol, 1 equivalentwith M = La, Sm, Gd, Tb-Yd or Y) was added resulting in an immediate color change (light orange for La and Pr, orange for Ce and Nd-Gd, brown for Tb, red for Dy-Tm and Y, dark red for Yb). The reaction mixture was stirred for 2 hours at room temperature before it was crystallized by layering with pentane (2 mL) and Et$_2$O (10 mL) and crystallization was set at - 35°C. After a day, colored crystals (yellow for La and Pr, brown Ce and Nd, red for Sm-Tm including Y and dark red for Yb) were isolated by pipetting out the supernatant, washed with THF (3 × 2 mL) and Et$_2$O (2 × 2 mL), and dried under vacuum.

La. Yield: 74.9 mg (88%). $^{19}$F NMR (282 MHz, CD$_3$CN): no signal. $^1$H NMR (200 MHz, CD$_3$CN): 1.18 to 1.27 ppm (12 H, tt, 7.18, CH$_3$ of NEt$_4$), 3.14 to 3.25 ppm (8 H, m, 7.33, CH$_2$ of NEt$_4$). UV-Vis (2.48 × 10$^{-5}$mol·L$^{-1}$ in MeCN): 217 nm (57 725 L·mol$^{-1}$·cm$^{-1}$), 283 nm (97 848 L·mol$^{-1}$ ·cm$^{-1}$), 397 nm (104 823 L·mol$^{-1}$·cm$^{-1}$), 444 nm (24 320 L·mol$^{-1}$·cm$^{-1}$). Raman (solid): 175 cm$^{-1}$, 220 cm$^{-1}$, 468 cm$^{-1}$, 485 cm$^{-1}$, 500 cm$^{-1}$. Raman (in MeCN): 173 cm$^{-1}$, 219 cm$^{-1}$, 461 cm$^{-1}$, 487 cm$^{-1}$.

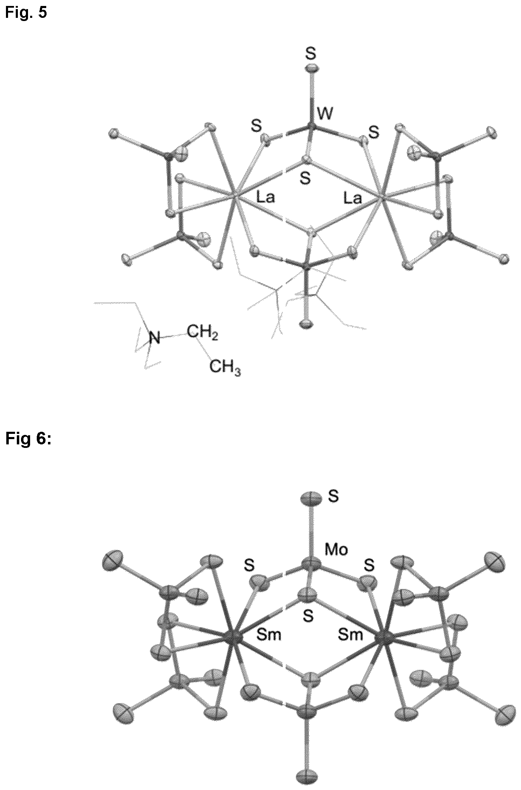

The crystal structure of [NEt$_4$]$_6$[La(WS$_4$)$_3$] is shown in figure 5.

Example 9: Synthesis of [NEt$_4$]$_6$[Sm$^{III}$(MoS$_4$)$_3$]$_2$ ; [NEt$_4$]$_3$[M$^{III}$(MeCN)(MoS$_4$)$_3$] (for M=Ho, Er, Yb, Y)

In a 20 mL scintillation vial, (NEt$_4$)$_2$MoS$_4$ (100.0 mg, 0.18 mmol, 3 equivalents) was solubilized in the minimum of MeCN (ca. 5 mL) under stirring, resulting in a bright red solution. Then, M(OTf)$_3$ (0.06 mmol, 1 equivalent with M = La-Yb or Sc or Y) was added resulting in an immediate color change (from dark red for La to dark red-green for Yb). The reaction mixture was stirred for 2 hours at room temperature before it was crystallized by layering with pentane (2 mL) and Et$_2$O (10 mL) and crystallization was set at - 35°C. Dark red crystals were isolated for M = Sm, Ho, Er, Yb, Y by pipetting out the supernatant, washed with Et$_2$O (2 × 2 mL), and dried under vacuum.

The crystal structure of [NEt$_4$]$_6$[Sm$^{III}$(MoS$_4$)$_3$] is shown in figure 6.

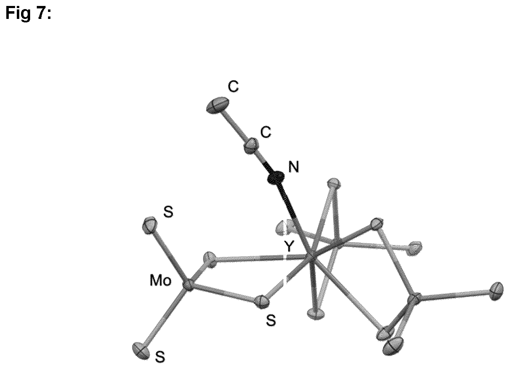

The crystal structure of [NEt$_4$]$_3$[Y$^{III}$(MeCN)(MoS$_4$)$_3$] is shown in figure 7.

Example 10a: Separation of Europium compounds from a mixture comprising Europium and Yttrium compounds using tetrathiotungstate

In a 20 mL scintillation vial, [NEt$_4$]$_2$[WS$_4$] (76.5 mg, 0.133 mmol, 8 equivalents) was solubilized in 5 mL of MeCN resulting in a bright yellow solution. The latter was treated with a mixture of Eu(OTf)$_3$/Y(OTf)$_3$ (1:1) (0.016 mmol, 1 equivalent) resulting in an immediate color change to dark red. After one hour a golden-brown precipitate was observed.

The reaction was stirred at room temperature for 24 h, before the solution was filtered on a porcelain 4 frit resulting in a golden-brown powder which was further dried under vacuum and a red filtrate which was taken to dryness and both were characterized by X-ray photoelectron spectroscopy. The golden-brown precipitate was found to contain 98.88 Atom-% of Europium tetrathiotungstate and 1.12% of Yttrium tetrathiotungstate, the dried red filtrate contained 5.02 mol-% of Europium tetrathiotungstate and 94.98 mol-% of Yttrium tetrathiotungstate. The dried golden-brown precipitate and the dried red filtrate were also characterized by ICP-OES. The results are summarized in table 1 below.

Example 10b: Separation of Europium compounds from a mixture comprising Europium and Yttrium compounds using tetrathiomolybdate

In a 20 mL scintillation vial, $[NEt_4]_2[MoS_4]$ (64.8 mg, 0.133 mmol, 8 equivalents) was solubilized in 5 mL of MeCN resulting in a bright red solution. The latter was treated with a mixture of $Eu(OTf)_3/Y(OTf)_3$ (1:1) (0.016 mmol, 1 equivalent) resulting in an immediate color change to dark red brownish. After one hour a brown precipitate was observed. The reaction was stirred at room temperature for 24 h, before the solution was filtered on a porcelain 4 frit resulting in a bronze powder which was further dried under vacuum (12.5 mg, 18 wt%) and a dark red filtrate which was taken to dryness (56.5 mg, 82 wt%) and both were characterized by X-ray photoelectron spectroscopy. The bronze precipitate was found to contain 94.97 Atom-% of Europium tetrathiomolybdate and 5.03 % of Yttrium tetrathiomolybdate, the dried red filtrate contained 13.96 mol-% of Europium tetrathiomolybdate and 86.04 mol-% of Yttrium tetrathiomolybdate.

Example 10c: Separation of Europium compounds from a mixture comprising Europium and Yttrium compounds using diooxodithiomolybdate

In a 20 mL scintillation vial, $[NEt_4]_2[MoO_2S_2]$ (53 mg, 0.117 mmol, 7 equivalents) was solubilized in 5 mL of MeCN resulting in a bright red solution. The latter was treated with a mixture of $Eu(OTf)_3/Y(OTf)_3$ (1:1) (0.016 mmol, 1 equivalent) resulting in an immediate color change to dark red brownish. After one hour a brown precipitate was observed. The reaction was stirred at 60°C for 4 h and then at room temperature for 24 h, before the solution was centrifuged. The dark grey precipitate was further dried under vacuum (11.8 mg, 16 wt%) and the dark red filtrate which was taken to dryness (60.3 mg, 84 wt%).

Example 10d: Separation of Neodymium compounds from a mixture comprising Neodymium and Dysprosium compounds using tetrathiotungstate.

In a 20 mL scintillation vial, $[NEt_4]_2[WS_4]$ (192 mg, 0.336 mmol, 7 equivalents) was solubilized in 6 mL of MeCN resulting in a bright red solution. The latter was treated with a mixture of $Nd(OTf)_3/Dy(OTf)_3$ (1:1) (0.05 mmol, 1 equivalent) resulting in an immediate color change from bright yellow to red. After three hours of stirring under ambient conditions, $Et_2O$ was added (1.5 mL) resulting in the formation of an orange precipitate. The reaction was stirred for one hour before being centrifuged to isolate the precipitate and the filtrate. The orange precipitate was further dried under vacuum (94 mg, 38 wt%) and the red filtrate was taken to dryness (155 mg, 62 wt%). Both phases were also quantified by ICP-OES (see table 5 below).

Example 11: Recovery of lamp phosphor

11a): A compact fluorescent light bulb (Lightway 7 W, 385 Lumens 60 mA, 230 V) was smashed inside a zip lock bag to separate the glass from the bulb socket. The extracted glass (17.1445 g) was mortared into a fine white sand. That powder was then suspended in a 1:2 mixture of trifluoromethanesulfonic acid (2 mL) and water at 0 °C, resulting in an off-white slurry. The suspension was heated at 110 °C for 2 h resulting in a color change to light pink. Water was added (10 mL) and the slurry was stirred for 30 min before being filtered and the filtrate taken to dryness at 200 °C for 25 h (0.568 g, 3.3 wt%) to obtain a powder.

11b): A compact fluorescent light bulb (PHILIPS Genie 14 W energy saver 230-240 V) was smashed inside a zip lock bag to separate the glass from the bulb socket. The extracted glass (21.150 g) was mortared into a fine white sand. That powder was then suspended 5 in a 1:2 mixture of trifluoromethane sulfonic acid (2 mL) and water at 0 °C, resulting in an off-white slurry. The suspension was heated at 110 °C for 2 h resulting in a color change to light pink. Water was added (10 mL) and the slurry was stirred for 30 min before being filtered and the filtrate taken to dryness at 200 °C for 25 h to obtain a powder (1.2275 g, 5.8 wt%). The dried filtrate was also characterized by ICP-OES. The results are summarized in table 3 below.

Example 12: Recovery of Europium from lamp phosphor

In a 25 mL scintillation vial, $[NEt_4]_2[WS_4]$ (0.500 g, 0.87 mmol) was solubilized in 20 mL of MeCN resulting in a bright yellow solution. To the latter the lamp phosphor powder obtained in example 11a) (0.200 g) was added which resulted in an immediate color change to dark red. After one hour a golden-brown precipitate was observed. The reaction was stirred at room temperature for 24 h, before the solution was filtered on a porcelain 4 frit resulting in a golden-brown powder which was further dried under vacuum (24.6 mg, 12 wt%) and a red filtrate which was taken to dryness (659.4 mg, >3wt% loss).

The golden-brown precipitate was found to contain 71.31 Atom-% of Europium tetrathiotungstate and 28.69 Atom-% of Yttrium tetrathiotungstate, the dried red filtrate contained no detectable trace of Europium tetrathiotungstate and 100 Atom-% of Yttrium tetrathiotungstate. The dried golden-brown precipitate and the dried red filtrate were also characterized by ICP-OES. The results are summarized in table 4 below.

Example 13: Separation of Eu from 1:14 (wt%) Eu/Y model mixture

In a 25 mL scintillation vial, $(NEt_4)_2WS_4$ (480 mg, 0.840 mmol, 50 equiv.) was solubilized in 20 mL of MeCN resulting in a bright yellow solution. $Eu(OTf)_3$ (10 mg, 0.016 mmol, 1 equiv.) and $Y(OTf)_3$ (140 mg, 0.261 mmol, 15.6 equiv.) were added as solids to this solution, resulting in an immediate color change to dark red. After one hour stirring at room temperature a golden-brown precipitate had formed. The reaction was stirred at room temperature for 24h before the solution was centrifuged to separate the red filtrate from the golden-brown precipitate. The latter was washed with 2 x 4 mL of MeCN and then both phases were dried under vacuum yielding a golden solid (18.5 mg) and a red solid (599.8 mg) which were characterized by ICP-OES. The results are summarized in table 2 below.

Example 14: Recovery of Europium oxide from complex 1:1 (wt%) Eu:Y model mixture (example 10a)

The golden-brown precipitate obtained from example 10 a (115 mg, 0.11 mmol, 1 equiv.) was solubilized in 5 mL of degassed miliQ water resulting in a yellow solution. Ammonium oxalate (40 mg, 0.28 mmol, 2.5 equiv.) was added as a solid to the solution, leading immediately to the precipitation of a dark red-brown solid. The reaction was stirred at room temperature for 1 h before the solution was centrifuged. The yellow supernatant was transferred to a Schlenk flask and taken to dryness. The red-brown solid was rinsed with water (2 x 10 mL) and dried under vacuum (25 mg, 0.102 mmol, 93 % yield assuming a composition as $EuC_2O_4$), before being calcined in a quartz tube furnace at 600 °C for 2 h under a flow of dry air (150 mL/min). This resulted in the formation of a white solid (10.3 mg, 0.03 mmol) Elemental analysis found (calc.) % for $Eu_2O_3$: Eu, 77.56 (86.36). Y 2.198 (0), corresponding to a 90% purity.

Example 15: Determination of Enrichment, Separation Factors and Efficiency

The separation factor $S_{Eu/Y}$ was determined by the following equation:

$$S_{Eu/Y} = D_{solid} \times D_{filtrate} = \frac{\eta_{Eu}}{\eta_Y} \times \frac{\eta_Y}{\eta_{Eu}}$$

Where the weight ratios (wt%) were determined by ICP-OES spectroscopy.

The recovery efficiency was determined as the percentage of Europium extracted from the original mixture using the following equation:

$$R_{Eu} = 100 - \left[ \frac{C_{Eu-liquid}}{C_{Eu-imput}} \times 100 \right]$$

Where the concentrations (*ppm*) were determined by ICP-OES spectroscopy.

Table 1 shows the ICP-OES quantification of Europium and Yttrium in the precipitate (Eu phase) and the filtrate (Y phase) obtained from the 1:1 wt% $Eu(OTf)_3$ and $Y(OTf)_3$ mixture according to example 10a and duplicates.

Table 1:

| Entry | Solid Phase [wt%] | Liquid Phase [wt%] | **Separation** Factor $S_{Eu/Y}$ | Recovery efficiency $R_{Eu}$ |
|---|---|---|---|---|
| 1 | 11.336 ± 0.115 (Eu) | 0.052 ± 0.001 (Eu) | 2308.4 ± 27.5 | 94.8 |

(continued)

| Entry | Solid Phase [wt%] | Liquid Phase [wt%] | Separation Factor $S_{Eu/Y}$ | Recovery efficiency $R_{Eu}$ |
|---|---|---|---|---|
| | 0.241 ± 0.003 (Y) | 2.553 ± 0.022 (Y) | | |
| 2 | 13.710 ± 0.137 (Eu) | 0.025 ± 0.001 (Eu) | 4857.9 ± 59.6 | 97.5 |
| | 0.279 ± 0.003 (Y) | 2.462 ± 0.019 (Y) | | |

Table 2 shows the ICP-OES quantification of Europium and Yttrium in the precipitate (Eu phase) and filtrate (Y phase) from the 1:14 wt% Eu(OTf)$_3$ and Y(OTf)$_3$ mixture and duplicates according to example 13.

Table 2:

| Entry | Solid Phase [wt%] | Liquid Phase [wt%] | Separation Factor $S_{Eu/Y}$ | Recovery efficiency $R_{Eu}$ |
|---|---|---|---|---|
| 1 | 11.338 ± 0.115 (Eu)<br>0.814 ± 0.08 (Y) | 0.018 ± 0.000 (Eu)<br>3.718 ± 0.024 (Y) | 2926.4 ± 18.4 | 98.2 |
| 2 | 9.973 ± 0.217 (Eu)<br>1.286 ± 0.028 (Y) | 0.011 ± 0.000 (Eu)<br>3.999 ± 0.029 (Y) | 2848.7 ± 30.2 | 98.9 |

Table 3 shows the ICP-OES quantification of Europium and Yttrium in the extracted lamp phosphor (PHILIPS Genie compact fluorescent light bulb (14 W energy saver 230-240 V)) according to example 11b.

Table 3:

| Entry | Europium [wt%] | Europium [ppm] | Yttrium [wt%] | Yttrium [ppm] | Y:Eu ratio |
|---|---|---|---|---|---|
| 1 | 0.93 | 9,268 | 12.6 | 125,597 | 13.6 |

Table 4 shows the ICP-OES quantification of Europium and Yttrium in the precipitate (Eu phase) and filtrate (Y phase) from lamp extracts and duplicates according to example 12.

Table 4:

| Entry | Solid Phase [wt%] | Liquid Phase [wt%] | Separation Factor $S_{Eu/Y}$ | Recovery efficiency $R_{Eu}$ |
|---|---|---|---|---|
| 1 | 6.809 ± 0.103 (Eu)<br>2.540 ± 0.038 (Y)<br>$D_{solid}$: 2.68 | 0.012 ± 0.000 (Eu)<br>3.548 ± 0.028 (Y)<br>$D_{liquid}$: 304.03<br>Eu[ppm]: 117 | 814.87 ± 13.5 | 98.7 |
| 2 | 7.468 ± 0.075 (Eu)<br>2.743 ± 0.028 (Y)<br>$D_{solid}$: 2.72 | 0.008 ± 0.000 (Eu)<br>3.803 ± 0.028 (Y)<br>$D_{liquid}$: 466.54<br>Eu[ppm]: 82 | 1270.2 ± 7.4 | 99.1 |

Table 5 shows the ICP-OES quantification of Neodymium and Dysprosium in the precipitate (Nd phase) and filtrate (Dy phase) obtained from the 1:1 model mixture according to example 10d.

Table 5:

| Entry | Solid Phase (wt%) | Liquid Phase (wt%) | Separation Factor $S_{Nd/Dy}$ |
|---|---|---|---|
| 1 | 8.513 (Nd)<br>2.096 (Dy)<br>$D_{solid}$: 4.061 | 0.057 (Nd)<br>3.911 (Dy)<br>$D_{liquid}$: 68.571<br>Nd [ppm]: 570 | 278.48 |

**Claims**

1. A process for the separation of rare earth element compounds comprising at least the steps of

    1) Reacting a mixture of at least two compounds of formula (I) comprising at least two different rare earth elements M

    $$MAn_3 \qquad (I)$$

    wherein

    M denotes a rare earth metal ion in the oxidation state (+III) selected from the group consisting of: Sc, Y, La, Ce, Pr, Nd, Pm, Sm, Eu, Gd, Tb, Dy, Ho, Er, Tm, Yb and Lu, preferably Y, La, Ce, Pr, Nd, Sm, Eu, Gd, Tb, Dy, Ho, Er, Tm, Yb and Lu.
    An denotes an monoanion or 2 An together denote a dianion or 3 An together denote a trianion

    with compounds of formula II

    $$Cat_2(MetS_xO_{(4-x)}) \qquad (II)$$

    wherein

    Cat is a monocation or $Cat_2$ as a whole is a dication
    Met is W or Mo, preferably W
    x is 1, 2, 3 or 4, preferably 2, 3 or 4, more preferably 4
    in the presence of at least one organic donor solvent, preferably at least one organic donor solvent capable of coordinating to rare earth metal ions M
    thereby forming a precipitate and

    2) separating the precipitate formed in step 1) from the residual solution.

2. The process according to claim 1, wherein

    An represents a monoanion selected from the group consisting of: nitrate, sulfate, chloride, bromide, iodide, thiocyanate, perchlorate, hexafluorophosphate, tetrafluoroborate, phosphate, phosphonates $R^1PO_3^{2-}$, hydrogen phosphonates $R^1PO_3H^-$; organophosphinates $R_2^1PO_2^-$ or $R^1PO_2H^-$, sulfonates $R^1SO_3^-$, carboxylic acids $R^1CO_2^-$, wherein $R^1$ denotes alkyl or aryl and/or
    2 An together represent a dianion selected from the group consisting of disulfonates $R^2(SO_3^-)_2$ and dicarboxylates $R^2(CO_2^-)_2$, wherein $R^2$ denotes alkane-diyl or aryl-diyl or
    3 An together represent a trianion selected from the group consisting of tricarboxylates $R^3(CO_2^-)_3$, wherein $R^3$ denotes alkane-triyl or aryl-triyl,

    preferably An is selected from perchlorate, hexafluorophosphate, tetrafluoroborate, methanesulfonate, p-methylphenylsulfonate, trifluoromethylsulfonate and trifluoroacetate and 3 An together is citrate, more preferably An is selected from methanesulfonate) and trifluoromethanesulfonate.

3. The process according to claim 1 or 2, wherein

    Cat is a monocation and selected from an alkali metal ion, such as lithium, sodium, potassium, rubidium and cesium, preferably sodium or potassium, or is an ammonium ion or a primary, secondary, tertiary or quaternary organic ammonium ion, in particular those of formula $[N(C_1-C_{18}\text{-alkyl})_sH_t]^+$ wherein s is 1, 2, 3 or 4 and t is (4-s), or is a guanidinium ion or an substituted guanidinium ion $^+NHR^6=C[N(C_1-C_{18}\text{-alkyl})_yH_z]_2$ wherein y is independently from the other y and each other either 1 or 2 and z is (2-y) and $R^6$ denotes hydrogen or $C_1-C_{18}$-alkyl, or is a phosphonium ion $[PR^7]_4^+$, wherein $R^7$ denotes alkyl or aryl, preferably aryl such as phenyl; or is a heterocyclylium cation, for example pyrimidinium or is heteroarylium, for example pyridinium or
    $Cat_2$ as a whole is a primary, secondary, tertiary or quaternary organic diammonium ion, preferably of formula $^+[N(C_1-C_{18}\text{-alkyl})_sH_t]\text{-}R^3\text{-}[N(C_1-C_{18}\text{-alkyl})_sH_t]^+$ wherein s is 0, 1, 2 or 3 and t is 3-s and $R^8$ denotes alkane-diyl or is a heteroarylium dication, for example bi-pyridinium,

whereby Cat preferably denotes a quaternary organic ammonium ion whereby tetraethylammonium is even more preferred.

4. The process according to any one of claims 1 to 3, wherein $(MetS_xO_{(4-x)})$ as a whole denotes tetrathiomolybdate $MoS_4^{2-}$ or tetrathiotungstate $WS_4^{2-}$, whereby tetrathiotungstate $WS_4^{2-}$ is preferred.

5. The process according to any one of claims 1 to 4, wherein the at least one organic donor solvent include alcohols, for example methanol, ethanol, isopropanol, n-propanol, n-butanol, 2-butanol, n-pentanol, n-hexanol and cyclohexanol; ethers, for example diethyl ether, tert-butyl methyl ether, dioxane, tetrahydrofuran, tetrahydropyran, 1,1-dimethoxymethane, 1,2-dimethoxyethane, diethylene glycol dimethyl ether, tetraethylene gycol dimethyl ether; nitriles, for example acetotonitrile, benzonitrile and benzylnitrile; isonitriles for example cyclonhexylisonitrile; amines, for example diethylamine, trimethylamine, tri-n-propylamine, di-n-propylamine, diisopropylamine, triisopropylamine, piperidine and pyrrolidine; amides, for example formamide, acetamide, and dimethylacetamide; esters, for example acetic acid methyl ester and acetic acid ethyl ester, heteroaryls, for example pyridine, 2-, 3- or 4-methylpyridine, imidazole, 1-methylimidazole, pyrimidine, pyrrole and chinoline and any mixture of aforementioned solvents or solvent types, whereby preferred organic donor solvents are nitriles, for example acetonitrile, benzonitrile and benzylnitrile, whereby acetonitrile is even more preferred.

6. The process according to any one of claims 1 to 5, wherein the molar ratio of compounds of formula (II) to compounds of formula (I) is for example in the range of from 1 to 1000, preferably 2.8 to 12.0 and more preferably 3.0 to 5.0.

7. The process according to any one of claims 1 to 6, wherein the reaction temperature in step 1) is in the range of from the freezing point of the solvent to its boiling point or the boiling point of the lowest component thereof or is in the range of from -40°C to 100°C, preferably -35° to 60°C and more preferably 0° to 50°C.

8. The process according to any one of claims 1 to 7, wherein the at least two compounds of formula (I) comprising at least two different rare earth elements M are selected from at least two different of the three groups wherein in

| | |
|---|---|
| Group A: | M is La, Ce, Pr, Pm or Nd |
| Group B: | M is Eu, Yb, Sm, Tm, Dy |
| Group C: | M is Sc, Y, Nd, Gd, Tb, Ho, Er or Lu |

or wherein alternatively in

| | |
|---|---|
| Group A: | M is La, Ce, Pr, Pm or Nd |
| Group B: | M is Eu |
| Group C: | M is Sc, Y, Sm, Gd, Tb, Dy, Ho, Er, Tm, Yb or Lu |

whereby in each of the alternative groupings Met is preferably W.

9. The process according to any one of claims 1 to 8, wherein in step 2 the precipitate formed in step 1) is separated from the residual solution by a method selected from sedimentation and decantation, centrifugation and filtration.

10. The process according to any one of claims 1 to 9, wherein process further contains as a further step
3) reacting the compounds comprising the structural elements of formulae (III) or (IV) or (V) with at least one compound of formula (VI)

$$Cat_2An^2 \qquad (VI)$$

wherein Cat denotes a monocation, preferably a monocation as defined in claim 3 above, more preferably ammonium and
$An^2$ denotes oxalate, carbonate, sulfate or two equivalents of hydroxide or hydrogen carbonate, preferably oxalate
thereby obtaining compounds of formulae (VII) from compounds comprising the structural element of formula (III)

$$EuAn^2 \qquad (VII)$$

or compounds of formulae (VIII) from compounds comprising the structural element of formulae (IV) or (V)

$$M_2An^2_3 \qquad (VIII)$$

wherein M has the same meaning including its preferential meaning as defined for formula (I) in claim 1 and further optionally recovering and/or recycling of compounds of formula (II),
whereby preferably the materials comprising rare earth metal compounds encompass rare earth element ores like for example Monazite, Bastnäsite, Synchisite, Gadolinite, Samarskite, Euxenite, Pyrochlore or mixtures thereof, rare earth metal concentrates such as mixed rare earth metal oxides, carbonates or hydroxides, coal ashes and ashes obtained by burning electronic waste or waste comprising electronic components, used nuclear fuels, electronic waste materials such as for example large and small appliances, screens and monitors, telecommunication devices such as computers and mobile phones, magnets and fluorescent lamps.

11. The process according to claim 10, wherein process further contains as a further step
4) calcinating compounds of formula (VII) or (VIII) at a temperature of 500°C or more, preferably between 500 and 1200°C , more preferably between 600° and 1000°C.

12. The process according to any one of claims 1 to 11 whereby compounds of formula (I) are obtained by a process comprising the steps of

i) reacting materials comprising rare earth metal compounds with acids of formula (IX)

$$H_m\text{-}An^3_m \qquad (IX)$$

wherein $An^3_m$ as a whole is a m-valent anion and m is 1, 2 or 3
in water to form aqueous solutions of compounds of formula (I)

ii) optionally separating the aqueous solutions of compounds of formula (I) from remaining solids
iii) optionally exchanging the m-valent anion $An^3_m$ by an anion An as defined above and preferably as defined above as specific and preferred embodiment
iv) drying

whereby the sequence of optional steps ii) and iii) may be changed.

13. Compounds comprising the structural units of formulae (III) or (IV) or (V)

$$Cat_2[M^H(MetS_xO_{(4-x)})_2] \qquad (III)$$

$$Cat_3[M^{III}L_z(MetS_xl_{(4-x)})_3] \qquad (IV)$$

$$Cat_6[M^{III}(MetS_xO_{(4-x)})_3]_2 \qquad (V)$$

wherein Cat, Met, L, x and z have the same meaning as defined in claim 1 and
M in formula (III) is Eu, Yb, Sm, Tm or Dy
M in formula (IV) is Sc, Y, Sm, Eu, Gd, Tb, Dy, Ho, Er, Tm, Yb or Lu
M in formula (V) is La, Ce, Pr, Pm, Nd, Sm

14. A process for the production, purification or recycling of rare earth elements and their compounds comprising a process of any one of claims 1 to 12.

15. Use of compounds of formula (II) as defined in claim 1 for the production, purification or recycling of rare earth elements and their compounds.

**Patentansprüche**

1. Ein Verfahren zur Trennung von Seltenerdverbindungen umfassend zumindest die Schritte

   1) Umsetzen einer Mischung aus mindestens zwei Verbindungen der Formel (I), umfassend mindestens zwei verschiedene Seltenerdelemente M

   $$MAn_3 \qquad (I)$$

   wobei

   M ein Seltenerdmetallion in der Oxidationsstufe (+III) bezeichnet, ausgewählt aus der Gruppe bestehend aus: Sc, Y, La, Ce, Pr, Nd, Pm, Sm, Eu, Gd, Tb, Dy, Ho, Er, Tm, Yb und Lu, vorzugsweise Y, La, Ce, Pr, Nd, Sm, Eu, Gd, Tb, Dy, Ho, Er, Tm, Yb und Lu
   An ein Monoanion bezeichnet oder 2 An zusammen ein Dianion bezeichnen oder 3 An zusammen ein Trianion bezeichnen

   mit Verbindungen der Formel (II)

   $$Cat_2(MetS_xO_{(4-x)}) \qquad (II)$$

   wobei

   Cat ein Monokation ist oder $Cat_2$ als Ganzes ein Dikation ist
   Met W oder Mo ist, vorzugsweise W
   x 1, 2, 3 oder 4 ist, vorzugsweise 2, 3 oder 4, noch bevorzugter 4
   in Gegenwart mindestens eines organischen Donorlösungsmittels, vorzugsweise mindestens eines organischen Donorlösungsmittels, das in der Lage ist, mit Seltenerdmetallionen M zu koordinieren,
   wodurch ein Niederschlag gebildet wird und

   2) Abtrennen des in Schritt 1) gebildeten Niederschlags von der Restlösung.

2. Das Verfahren nach Anspruch 1, worin

   An für ein Monoanion steht, das ausgewählt ist aus der Gruppe bestehend aus Nitrat, Sulfat, Chlorid, Bromid, Iodid, Thiocyanat, Perchlorat, Hexafluorophosphat, Tetrafluoroborat, Phosphat, Phosphonat $R^1PO_3^{2-}$, Hydrogenphosphonate $R^1PO_3H^-$, Organophosphinate $R_2^1PO_2^-$ oder $R^1PO_2H^-$, Sulfonate $R^1SO_3^-$, Carbonsäuren $R^1CO_2^-$, worin $R^1$ für Alkyl oder Aryl steht und/oder
   2 An zusammen für ein Dianion steht, das ausgewählt ist aus der Gruppe bestehend aus Disulfonaten $R^2(SO_3^-)_2$ und Dicarboxylaten $R^2(CO_2^-)_2$, worin $R^2$ für Alkan-diyl oder Aryl-diyl steht oder
   3 An zusammen für ein Trianion steht, das ausgewählt ist aus der Gruppe bestehend aus Tricarboxylaten $R^3(CO_2^-)_3$, worin $R^3$ für Alkan-triyl oder Aryl-triyl steht,

   vorzugsweise ist An ausgewählt aus Perchlorat, Hexafluorophosphat, Tetrafluoroborat, Methansulfonat, p-Methylphenylsulfonat, Trifluormethyl-sulfonat und Trifluoracetat und 3 An steht zusammen für Citrat, noch bevorzugter ist An ausgewählt aus Methansulfonat und Trifluormethansulfonat.

3. Das Verfahren nach Anspruch 1 oder 2, worin

   Cat ein Monokation ist und ausgewählt ist aus einem Alkalimetallion, wie Lithium, Natrium, Kalium, Rubidium und Cäsium, vorzugsweise Natrium oder Kalium, oder ein Ammonium-Ion ist oder ein primäres, sekundäres, tertiäres oder quaternäres organisches Ammonium-Ion ist, insbesondere ein solches der Formel $[N(C_1-C_{18}\text{-alkyl})_sH_t]^+$, worin s 1, 2, 3 oder 4 ist und t (4-s), ist, oder ein Guanidinium-Ion ist oder ein substituiertes Guanidinium-Ion $^+NHR^6=C[N(C_1-C_{18}\text{-alkyl})_yH_z]_2$ ist, worin y unabhängig von anderen y und voneinander entweder 1 oder 2 ist und z (2-y) ist und $R^6$ für Wasserstoff oder $C_1-C_{18}$-Alkyl steht, oder ein Phosphonium-Ion $[PR^7]_4^+$ ist, worin $R^7$ für Alkyl

oder Aryl steht, bevorzugt Aryl wie Phenyl; oder ein Heterocyclylium-Kation ist, beispielsweise Pyrimidinium oder Heteroarylium ist, beispielsweise Pyridinium oder

$Cat_2$ als Ganzes ein primäres, sekundäres, tertiäres oder quaternäres organisches Diammonium-Ion ist, vorzugsweise ein solches der Formel $^+[N(C_1\text{-}C_{18}\text{-alkyl})_sH_t]\text{-}R^8\text{-}[N(C_1\text{-}C_{18}\text{-alkyl})_sH_t]^+$, worin s 0, 1, 2 oder 3 ist und t 3-s ist und $R^8$ für Alkan-diyl steht ode rein Heteroarylium-Dikation ist, beispielsweise Bi-pyridinium,

wobei Cat vorzugsweise ein quaternäres organisches Ammoniumion bezeichnet, wobei Tetraethylammonium noch bevorzugter ist.

**4.** Das Verfahren nach einem der Ansprüche 1 bis 3, worin ($MetS_xO_{(4-x)}$) als Ganzes für Tetrathiomolybdat $MoS_4{}^{2-}$ oder Tetrathiotungstate $WS_4{}^{2-}$ steht, wobei, Tetrathiotungstate $WS_4{}^{2-}$ bevorzugt ist.

**5.** Verfahren nach einem der Ansprüche 1 bis 4, wobei das mindestens eine organische Donorlösungsmittel Alkohole, beispielsweise Methanol, Ethanol, Isopropanol, n-Propanol, n-Butanol, 2-Butanol, n-Pentanol, n-Hexanol und Cyclohexanol; Ether, beispielsweise Diethylether, tert-Butylmethylether, Dioxan, Tetrahydrofuran, Tetrahydropyran, 1,1-Dimethoxymethan, 1,2-Dimethoxyethan, Diethylenglykoldimethylether, Tetraethylenglykol-dimethylether; Nitrile, beispielsweise Acetonitril, Benzonitril und Benzylnitril; Isonitrile, beispielsweise Cyclohexylisonitril; Amine, beispielsweise Diethylamin, Trimethylamin, Tri-n-propylamin, Di-n-propylamin, Diisopropylamin, Triisopropylamin, Piperidin und Pyrrolidin; Amide, beispielsweise Formamid, Acetamid und Dimethylacetamid; Ester, beispielsweise Essigsäuremethylester und Essigsäureethylester, Heteroaryle, beispielsweise Pyridin, 2-, 3- oder 4-Methylpyridin, Imidazol, 1-Methylimidazol, Pyrimidin, Pyrrol und Chinolin und jede Mischung der vorgenannten Lösungsmittel oder Lösungsmitteltypen umfasst, wobei bevorzugte organische Donorlösungsmittel Nitrile sind, beispielsweise Acetonitril, Benzonitril und Benzylnitril, wobei Acetonitril noch bevorzugter ist.

**6.** Verfahren nach einem der Ansprüche 1 bis 5, wobei das Molverhältnis von Verbindungen der Formel (II) zu Verbindungen der Formel (I) beispielsweise im Bereich von 1 bis 1000, vorzugsweise 2,8 bis 12,0 und noch bevorzugter 3,0 bis 5,0 liegt.

**7.** Verfahren nach einem der Ansprüche 1 bis 6, wobei die Reaktionstemperatur in Schritt 1) im Bereich vom Gefrierpunkt des Lösungsmittels bis zu seinem Siedepunkt oder dem Siedepunkt seiner niedrigsten Komponente liegt oder im Bereich von -40°C bis 100°C, vorzugsweise -35°C bis 60°C und noch bevorzugter 0°C bis 50°C.

**8.** Verfahren nach einem der Ansprüche 1 bis 7, wobei die mindestens zwei Verbindungen der Formel (I), die mindestens zwei verschiedene Seltenerdelemente M umfassen, aus mindestens zwei verschiedenen der drei Gruppen ausgewählt sind, wobei in

| Gruppe A: | M | La, Ce, Pr, Pm oder Nd ist |
|---|---|---|
| Gruppe B: | M | Eu, Yb, Sm, Tm, Dy ist |
| Gruppe C: | M | Sc, Y, Nd, Gd, Tb, Ho, Er oder Lu ist |

oder wobei alternativ in

| Gruppe A: | M | La, Ce, Pr, Pm oder Nd ist |
|---|---|---|
| Gruppe B: | M | Eu ist |
| Gruppe C: | M | Sc, Y, Sm, Gd, Tb, Dy, Ho, Er, Tm, Yb oder Lu ist |

wobei in jeder der alternativen Gruppierungen Met vorzugsweise W ist.

**9.** Verfahren nach einem der Ansprüche 1 bis 8, wobei in Schritt 2 der in Schritt 1) gebildete Niederschlag durch ein Verfahren von der Restlösung abgetrennt wird, das ausgewählt ist aus Sedimentation und Dekantierung, Zentrifugation und Filtration.

**10.** Verfahren nach einem der Ansprüche 1 bis 9, wobei das Verfahren als weiteren Schritt umfasst
3) die Umsetzung der Verbindungen, die die Strukturelemente der Formeln (III) oder (IV) oder (V) umfassen, mit mindestens einer Verbindung der Formel (VI)

$$Cat_2An^2 \qquad (VI)$$

wobei

Cat für ein Monokation, vorzugsweise ein Monokation gemäß der Definition in Anspruch 3 oben, steht noch bevorzugter für Ammonium, und

$An_2$ für Oxalat, Carbonat, Sulfat oder zwei Äquivalente Hydroxid oder Hydrogencarbonat steht, vorzugsweise für Oxalat

wodurch Verbindungen der Formeln (VII) aus Verbindungen, die das Strukturelement der Formel (III) enthalten, erhalten werden

$$EuAn^2 \qquad (VII)$$

oder Verbindungen der Formeln (VIII) aus Verbindungen, die das Strukturelement der Formeln (IV) oder (V) enthalten,

$$M_2An^2{}_3 \qquad (VIII)$$

wobei M dieselbe Bedeutung hat, einschließlich seiner bevorzugten Bedeutung, wie für Formel (I) in Anspruch 1 definiert

und ferner gegebenenfalls Rückgewinnung und/oder Recycling von Verbindungen der Formel (II), wobei vorzugsweise die Materialien, die Seltenerdmetallverbindungen umfassen, Seltenerderze wie beispielsweise Monazit, Bastnäsit, Synchisit, Gadolinit, Samarsit, Euxenit, Pyrochlor oder Mischungen davon, Seltenerdmetallkonzentrate wie gemischte Seltenerdmetalloxide, -carbonate oder -hydroxide, Kohleasche und Asche aus der Verbrennung von Elektronikschrott oder Abfällen, die elektronische Bauteile enthalten, verbrauchte Kernbrennstoffe, Elektronikschrott, wie beispielsweise Groß- und Kleingeräte, Bildschirme und Monitore, Telekommunikationsgeräte wie Computer und Mobiltelefone, Magnete und Leuchtstofflampen umfassen.

11. Verfahren nach Anspruch 10, wobei das Verfahren als weiteren Schritt umfasst

   4) Kalzinieren von Verbindungen der Formel (VII) oder (VIII) bei einer Temperatur von 500°C oder mehr, vorzugsweise zwischen 500 und 1200°C, noch bevorzugter zwischen 600°C und 1000°C.

12. Verfahren nach einem der Ansprüche 1 bis 11, wobei die Verbindungen der Formel (I) durch ein Verfahren erhalten werden umfassend die Schritte

   i) reagierenlassen von Materialien, die Seltenerdmetallverbindungen umfassen mit Säuren der Formel (IX)

$$H_m\text{-}An^3{}_m \qquad (IX)$$

   worin $An^3{}_m$ als Ganzes ein m-wertiges Anion ist und m 1, 2 oder 3 ist
   in Wasser um eine wässrige Lösung von Verbindungen der Formel (I) zu erzeugen

   ii) optional separieren der wässrigen Lösung enthaltend die Verbindungen der Formel (I) von verbleibenden Feststoffen
   iii) optional austauschen des m-wertigen Anions durch ein Anion An wie oben definiert und bevorzugt wie oben als spezifische und bevorzugte Ausführungsform definiert
   iv) trocknen,

wobei die Reihenfolge der optionalen Schritten ii) und iii) getauscht werden kann.

13. Verbindungen umfassend die Struktureinheiten der Formeln (III) oder (IV) oder (V)

$$Cat_2[M^{II}(MetS_xO_{(4\text{-}x)})_2] \qquad (III)$$

$$Cat_3[M^{III}L_z(MetS_xO_{(4\text{-}x)})_3] \qquad (IV)$$

$$Cat_6[M^{III}(MetS_xO_{(4-x)})_3]_2 \qquad (V)$$

worin Cat, Met, L, x und z die gleiche Bedeutung besitzen, wie in Anspruch 1 definiert und
M in Formel (III) Eu, Yb, Sm, Tm oder Dy ist
M in Formel (IV) Sc, Y, Sm, Eu, Gd, Tb, Dy, Ho, Er, Tm, Yb oder Lu ist
M in Formel (V) La, Ce, Pr, Pm, Nd, Sm ist.

14. Verfahren zur Herstellung, Reinigung oder Wiederverwertung von Seltenerdelementen und deren Verbindungen, umfassend ein Verfahren nach einem der Ansprüche 1 bis 12.

15. Verwendung von Verbindungen der Formel (II) gemäß Anspruch 1 zur Herstellung, Reinigung oder Wiederverwertung von Seltenerdelementen und deren Verbindungen.

**Revendications**

1. Procédé de séparation de composés d'éléments des terres rares comprenant au moins les étapes de

   1) mise en réaction d'un mélange d'au moins deux composés de formule (I) comprenant au moins deux éléments des terres rares M différents

   $$MAn_3 \qquad (I)$$

   dans laquelle

   M désigne un ion de métal des terres rares au degré d'oxydation (+III) choisi dans le groupe constitué par : Sc, Y, La, Ce, Pr, Nd, Pm, Sm, Eu, Gd, Tb, Dy, Ho, Er, Tm, Yb et Lu, de préférence Y, La, Ce, Pr, Nd, Sm, Eu, Gd, Tb, Dy, Ho, Er, Tm, Yb et Lu.
   An désigne un monoanion ou 2 An désignent ensemble un dianion ou 3 An désignent ensemble un trianion avec des composés de formule II

   $$Cat_2(MetS_xO_{(4-x)}) \qquad (II)$$

   dans laquelle
   Cat est un monocation ou $Cat_2$ dans son ensemble est un dication
   Met est W ou Mo, de préférence W
   x est 1, 2, 3 ou 4, de préférence 2, 3 ou 4, plus préférablement 4
   en présence d'au moins un solvant organique donneur, de préférence au moins un solvant organique donneur capable de se coordiner à des ions M de métal des terres rares
   formant ainsi un précipité et

   2) séparation du précipité formé dans l'étape 1) de la solution résiduelle.

2. Procédé selon la revendication 1, dans lequel

   An représente un monoanion choisi dans le groupe constitué par : nitrate, sulfate, chlorure, bromure, iodure, thiocyanate, perchlorate, hexafluorophosphate, tétrafluoroborate, phosphate, phosphonates $R^1PO_3^{2-}$, hydrogénophosphonates $R^1 PO_3H^-$ ; organophosphinates $R_2^1PO_2^-$ ou $R^1PO_2H^-$, sulfonates $R^1SO_3^-$, acides carboxyliques $R^1CO_2^-$, où $R^1$ représente alkyle ou aryle et/ou
   2 An représentent ensemble un dianion choisi dans le groupe constitué par les disulfonates $R^2(SO_3^-)_2$ et les dicarboxylates $R^2(CO_2^-)_2$, dans lesquels $R^2$ désigne alcane-diyle ou aryl-diyle ou
   3 An représentent ensemble un trianion choisi dans le groupe constitué par les tricarboxylates $R^3(CO_2^-)_3$, où $R^3$ désigne alcane-triyle ou aryl-triyle,
   préférablement An est choisi parmi perchlorate, hexafluorophosphate, tétrafluoroborate, méthanesulfonate, p-méthylphénylsulfonate, trifluorométhylsulfonate et trifluoroacétate et 3 An ensemble sont citrate, plus préférablement An est choisi parmi méthanesulfonate) et trifluorométhanesulfonate.

3. Procédé selon la revendication 1 ou 2, dans lequel

Cat est un monocation et choisi parmi un ion de métal alcalin, tel que le lithium, le sodium, le potassium, le rubidium et le césium, de préférence le sodium ou le potassium, ou est un ion ammonium ou un ion ammonium organique primaire, secondaire, tertiaire ou quaternaire, en particulier ceux de formule $[N(C_1\text{-}C_{18}\text{-alkyl})_sH_t]^+$ où s vaut 1, 2, 3 ou 4 et t vaut (4-s), ou est un ion guanidinium ou un ion guanidinium substitué $^+NHR^6=C[N(C_1\text{-}C_{18}\text{-alkyl})_yH_z]_2$ où y est indépendamment de l'autre y et l'un de l'autre soit 1, soit 2 et z est (2-y) et $R^6$ désigne hydrogène ou $C_1\text{-}C_{18}$-alkyle, ou est un ion phosphonium $[PR^7]_4^+$, où $R^7$ désigne alkyle ou aryle, de préférence aryle tel que phényle ; ou est un cation hétérocyclylium, par exemple pyrimidinium ou est hétéroarylium, par exemple pyridinium ou
Cat$_2$ est un ion diammonium organique primaire, secondaire, tertiaire ou quaternaire, de préférence de formule $^+[N(C_1\text{-}C_{18}\text{-alkyl})_sH_t]\text{-}R^8\text{-}[N(C_1\text{-}C_{18}\text{-alkyl})_sH_t]^+$ où s est 0, 1, 2 ou 3 et t est 3-s et $R^8$ désigne un alcane-diyle ou est un dication hétéroarylium, par exemple bi-pyridinium,
Cat désigne de préférence un ion ammonium organique quaternaire, tétraéthylammonium étant encore plus préféré.

4. Procédé selon l'une quelconque des revendications 1 à 3, dans lequel $(MetS_xO_{(4-x)})$ dans son ensemble désigne tétrathiomolybdate $MoS_4^{2-}$ ou tétrathiotungstate $WS_4^{2-}$, tétrathiotungstate $WS_4^{2-}$ étant préféré.

5. Procédé selon l'une quelconque des revendications 1 à 4, dans lequel l'au moins un solvant donneur organique inclut des alcools, par exemple méthanol, éthanol, isopropanol, n-propanol, n-butanol, 2-butanol, n-pentanol, n-hexanol et cyclohexanol ; des éthers, par exemple éther diéthylique, éther tert-butylique méthylique, dioxane, tétrahydrofurane, tétrahydropyrane, 1,1-diméthoxyméthane, 1,2-diméthoxyéthane, éther diméthylique de diéthylène glycol, éther diméthylique de tétraéthylène glycol ; des nitriles, par exemple acétonitrile, benzonitrile et benzylnitrile ; des isonitriles, par exemple cyclohexylisonitrile ; des amines, par exemple diéthylamine, triméthylamine, tri-n-propylamine, di-n-propylamine, diisopropylamine, triisopropylamine, pipéridine et pyrrolidine ; des amides, par exemple formamide, acétamide et diméthylacétamide ; des esters, par exemple l'ester méthylique de l'acide acétique et l'ester éthylique de l'acide acétique ; des hétéroaryles, par exemple la pyridine, la 2-, 3- ou 4-méthylpyridine, l'imidazole, le 1-méthylimidazole, la pyrimidine, le pyrrole et la chinoline et tout mélange des solvants ou types de solvants susmentionnés, les solvants donneurs organiques préférés étant les nitriles, par exemple l'acétonitrile, le benzonitrile et le benzylnitrile, l'acétonitrile étant encore plus préféré.

6. Procédé selon l'une quelconque des revendications 1 à 5, dans lequel le rapport molaire des composés de formule (II) sur les composés de formule (I) est par exemple dans la plage allant de 1 à 1 000, de préférence de 2,8 à 12,0 et plus préférablement de 3,0 à 5,0.

7. Procédé selon l'une quelconque des revendications 1 à 6, dans lequel la température de réaction dans l'étape 1) se situe dans la plage allant du point de congélation du solvant à son point d'ébullition ou du point d'ébullition de son composant le plus bas ou se situe dans la plage allant de -40 °C à 100 °C, préférablement, -35° à 60 °C, et plus préférablement 0° à 50 °C.

8. Procédé selon l'une quelconque des revendications 1 à 7, dans lequel les au moins deux composés de formule (I) comprenant au moins deux éléments des terres rares M différents sont choisis parmi au moins deux différents des trois groupes dans lesquels dans le

Groupe A : M est La, Ce, Pr, Pm ou Nd
Groupe B : M est Eu, Yb, Sm, Tm, Dy
Groupe C : M est Sc, Y, Nd, Gd, Tb, Ho, Er ou Lu
ou dans lesquels en variante dans le
Groupe A : M est La, Ce, Pr, Pm ou Nd
Groupe B : M est Eu
Groupe C : M est Sc, Y, Sm, Gd, Tb, Dy, Ho, Er, Tm, Yb ou Lu
où dans chacun des groupements alternatifs Met est de préférence W.

9. Procédé selon l'une quelconque des revendications 1 à 8, dans lequel dans l'étape 2, le précipité formé dans l'étape 1) est séparé de la solution résiduelle par un procédé choisi parmi la sédimentation et la décantation, la centrifugation et la filtration.

10. Procédé selon l'une quelconque des revendications 1 à 9, dans lequel le procédé contient en outre comme une étape supplémentaire

3) la mise en réaction des composés comprenant les éléments structuraux des formules (III) ou (IV) ou (V) avec au moins un composé de formule (VI)

$$Cat_2An^2 \qquad (VI)$$

où Cat désigne un monocation, de préférence un monocation tel que défini selon la revendication 3 ci-dessus, plus préférablement ammonium et
$An^2$ désigne oxalate, carbonate, sulfate ou deux équivalents d'hydroxyde ou d'hydrogénocarbonate, de préférence oxalate
obtenant ainsi des composés de formule (VII) à partir de composés comprenant l'élément structural de formule (III)

$$EuAn^2 \qquad (VII)$$

ou des composés de formule (VIII) à partir de composés comprenant l'élément structural de formule (IV) ou (V)

$$M_2An^2_3 \qquad (VIII)$$

dans laquelle M a la même signification, y compris sa signification préférentielle telle que définie pour la formule (I) dans la revendication 1
et en outre facultativement la récupération et/ou le recyclage de composés de formule (II),
les matières comprenant des composés de métal des terres rares englobant des minerais d'éléments des terres rares comme par exemple la monazite, la bastnäsite, la synchisite, la gadolinite, la samarskite, l'euxénite, le pyrochlore ou leurs mélanges, des concentrés de métaux des terres rares tels que les oxydes, carbonates ou hydroxydes mixtes de métaux des terres rares, des cendres de charbon et cendres obtenues par combustion de déchets ou déchets électroniques comprenant des composants électroniques, des combustibles nucléaires usagés, des matériaux de déchets électroniques tels que par exemple les grands et petits appareils, écrans et moniteurs, appareils de télécommunication tels que les ordinateurs et téléphones portables, aimants et lampes fluorescentes.

11. Procédé selon la revendication 10, dans lequel le procédé contient en outre comme étape supplémentaire
4) la calcination de composés de formule (VII) ou (VIII) à une température de 500 °C ou plus, de préférence entre 500 et 1 200 °C, plus préférentiellement entre 600° et 1 000 °C.

12. Procédé selon l'une quelconque des revendications 1 à 11, dans lequel des composés de formule (I) sont obtenus par un procédé comprenant les étapes de

i) la mise en réaction de matériaux comprenant des composés de métal des terres rares avec des acides de formule (IX)

$$H_m\text{-}An^3_m \qquad (IX)$$

où $An^3_m$ dans son ensemble est un anion m-valent et m est 1, 2 ou 3
dans de l'eau pour former des solutions aqueuses de composés de formule (I)

ii) éventuellement la séparation des solutions aqueuses de composés de formule (I) de solides restants
iii) éventuellement, l'échange de l'anion m-valent $An^3_m$ par un anion An tel que défini ci-dessus et de préférence tel que défini ci-dessus en tant que mode de réalisation particulier et préféré
iv) le séchage

la séquence des étapes facultatives ii) et iii) pouvant être changée.

13. Composés comprenant les unités structurales de formules (III) ou (IV) ou (V)

$$Cat_2[M^H(MetS_xO_{(4-x)})_2] \qquad (III)$$

$$Cat_3[M^{III}L_z(MetS_xO_{(4-x)})_3] \qquad (IV)$$

$$Cat_6[M^{III}(MetS_xO_{(4-x)})_3]_2 \qquad (V)$$

dans lesquelles Cat, Met, L, x et z ont la même signification que celle définie dans la revendication 1 et
M dans la formule (III) est Eu, Yb, Sm, Tm ou Dy
M dans la formule (IV) est Sc, Y, Sm, Eu, Gd, Tb, Dy, Ho, Er, Tm, Yb ou Lu
M dans la formule (V) est La, Ce, Pr, Pm, Nd, Sm

14. Procédé pour la production, la purification ou le recyclage d'éléments de terres rares et de leurs composés, comprenant un procédé selon l'une quelconque des revendications 1 à 12.

15. Utilisation de composés de formule (II) tels que définis dans la revendication 1 pour la production, la purification ou le recyclage d'éléments de terres rares et de leurs composés.

**Fig 1:**

**Fig 2:**

**Fig 3:**

**Fig 4:**

**Fig. 5**

**Fig 6:**

**Fig 7:**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20120027651 A
- WO 2015106324 A1
- WO 2019201581 A1
- DE 102014206223
- DE 102014224015

### Non-patent literature cited in the description

- **P. FRÖHLICH** ; **T. LORENZ** ; **G. MARTIN** ; **B. BRETT** ; **M. BERTAU**. *Angew. Chem. Int. Ed.*, 2017, vol. 56, 2544-2580
- **C. HAGELÜKEN** ; **D. GOLDMANN**. *Miner. Econ.*, 2022
- **NIKHIL DHAWAN** ; **HIMANSHU TANVAR**. A critical review of end-of-life fluorescent lamps recycling for recovery of rare earth values. *Sustainable Materials and Technologies*, 2022, 32
- **Y. FUJITA** ; **S.K MCCALL** ; **D. GINOSAR**. Recycling rare earths: Perspectives and recent advances. *MRS Bulletin*, vol. 47, 283-288
- **C. RAMPRASAD** ; **WILLIS GWENZI** ; **NHAMO CHAUKURA** ; **NUR IZYAN WAN AZELEE** ; **ANUSHKA UPAMALI RAJAPAKSHA** ; **M. NAUSHAD** ; **S. RANGABHASHIYAM**. Strategies and options for the sustainable recovery of rare earth elements from electrical and electronic waste. *Chemical Engineering Journal*, 2022, vol. 442, 1
- **A. ANAND** ; **R. SINGH**. *Sep. Purif. Rev.*, 2021, vol. 50, 96-112
- **Y. WU** ; **X. YIN** ; **Q. ZHANG** ; **W. WANG** ; **X. MU**. *Resour. Conserv. Recycl.*, 2014, vol. 88, 21-31
- **E. O. OPARE** ; **E. STRUHS**. *A. Mirkouei, Renew. Sust. Energ. Rev.*, 2021, vol. 143, 110917
- **L. R. MORSS**. *Chem. Rev.*, 1976, vol. 76, 827-841
- **A. KUMARI** ; **M. K. JHA** ; **D. D. PATHAK** ; **S. CHAKRAVARTY** ; **J.-C. LEE**. *Sep. Purif. Rev.*, 2019, vol. 48, 91-121
- **B. VAN DEN BOGAERT** ; **D. HAVAUX** ; **K. BINNEMANS** ; **T. VAN GERVEN**. *Green Chem.*, 2015, vol. 17, 2180-2187
- **Y. WU** ; **Q. ZHANG** ; **T. ZUO**. *J. Clean. Prod.*, 2019, vol. 226, 858-865
- **MCDONALD, J. W.** ; **FRIESEN, G. D.** ; **ROSENHEIN, L. D.** ; **NEWTON, W. E.** Syntheses and characterization of ammonium and tetraalkylammonium thiomolybdates and thiotungstates.. *Inorganica Chim. Acta*, 1983, vol. 72, 205-210
- **G. M. SHELDRICK**. *Acta Cryst.*, 2015, vol. 71, 3-8
- **G. M. SHELDRICK**. *Acta Cryst.*, 2008, vol. 64, 112-122